# EUROPEAN PATENT APPLICATION

(11) **EP 1 662 732 A2**
(43) Date of publication of application: **31.05.2006**
(21) Application number: 05292525.2
(22) Date of filing: 29.11.2005
(51) Int. Cl.: H04L 12/58

(54) **Method and device for information processing**

(30) Priority: 29.11.2004 JP 2004344180
(71) Applicant: SONY CORPORATION, Tokyo (JP)
(72) Inventor: Morita, Tadashi, Shinagawa-ku Tokyo (JP)
(74) Representative: Thévenet, Jean-Bruno

(57) **Abstract**

An information processing system includes an information providing apparatus, first and second electronic devices, and an information processing apparatus (14). The information processing apparatus (14) includes a receiver (121) receiving a first message including a first address temporarily used for reporting predetermined information and a second address, i.e., the address of the second electronic device, transmitted from the first electronic device, an analyzer (122) analyzing, on the basis of the received first message, the first and second addresses included in the first message, a storage unit (124) storing the first and second addresses in association with each other on the basis of an analysis result obtained by the analyzer (122), and a transmitter (121) transmitting to the second address, on the basis of the first and second addresses, a second message including the first address, which is data for providing the predetermined information to a user, transmitted from the information providing apparatus for providing the predetermined information.

## Description

### BACKGROUND OF THE INVENTION

### 1. Field of the Invention

The present invention relates to information processing systems, information providing apparatuses and methods, electronic devices and methods used therefor, information processing apparatuses and methods, recording media, and programs. More particularly, the invention relates to an information processing system, an information providing apparatus and method, an electronic device and a method used therefor, an information processing apparatus and method, a recording medium, and a program in which a leakage of personal information can be prevented.

### 2. Description of the Related Art

Due to the recent widespread use of email by using personal computers or cellular telephones, various services can be provided through email.

If, for example, a user wishes to subscribe to a service that provides predetermined information, he/she can obtain that information by providing personal information, such as his/her email address, to a service provider and by receiving the information at the email address from the service provider.

More specifically, if, for example, a user wishes to receive a distribution service of an email newsletter, which is a service for distributing information regularly by email from a newsletter issuer to subscribers, he/she receives the distribution service by providing personal information, such as his/her email address, to a newsletter provider and by receiving the newsletter at the email address.

That is, to receive a service, the user has to provide personal information, such as an email address, to a service provider.

A typical known type of information providing system is disclosed in, for example, Japanese Unexamined Patent Application Publication No. 2003-85659. In this system, a user brings a personal digital assistant (PDA) into close proximity with an information requestor disposed on a display unit of an information board that displays guidance information to be provided. Then, a reader/writer disposed in the information requestor obtains information to be provided to the PDA according to a non-contact integrated circuit (IC) card (and more specifically, personal information stored in the IC card) contained in the PDA and establishes Bluetooth® communication with the PDA based on a PDA Bluetooth address reported from the PDA to provide the obtained information to the PDA.

### SUMMARY OF THE INVENTION

In known systems, however, once personal information, such as an email address, is provided to an information provider, the information provider can keep such personal information even after obtaining necessary information. Thus, information that is not requested by the user may be regularly sent to the user, or the personal information may leak to other agents.

Additionally, personal information, such as email addresses, may be centrally managed, in which case, a specific administrator is in charge of managing the personal information. Accordingly, there is a risk that the administrator can steal the personal information, and also, costs, such as labor costs for the administrator, are required.

In view of the above background, it is desirable to use temporary email addresses to prevent a leakage of personal information by prohibiting a service provider from specifying the identities of users when providing services to the users.

It is also desirable to reduce the cost by not having specific administrators.

According to an embodiment of the present invention, there is provided an information processing system including an information providing apparatus, a first electronic device, a second electronic device, and an information processing apparatus. The information providing apparatus includes first generation means for generating a first address temporarily used for reporting predetermined information to a user, first transmission means for transmitting the first address to the first electronic device, generation means for generating the predetermined information when reporting the predetermined information to the user, second generation means for generating, on the basis of the first address and the predetermined information, a first message including the first address and the predetermined information as data for providing the predetermined information to the user, and second transmission means for transmitting the generated first message to the information processing apparatus. The first electronic device includes first reception means for receiving the first address sent from the information providing apparatus, storage means for storing the received first address, and third transmission means for transmitting the stored first address to the second electronic device in response to a request from the second electronic device. The second electronic device includes third generation means for generating, on the basis of the first address sent from the first electronic device, a second message including the first address and a second address, which is an address of the second electronic device, as data for transmitting the first message to the information processing apparatus, fourth transmission means for transmitting the generated second message to the information processing apparatus, second reception means for receiving the first message sent from the information processing apparatus, first analyzing means for analyzing, on the basis of the received first message, the predetermined information included in the first message, and reporting means for reporting the predetermined information included in the first message to the user on the basis of an analysis result obtained by the first analyzing means. The information processing apparatus includes third reception means for receiving the second message sent from the second electronic device, second analyzing means for analyzing, on the basis of the received second message, the first address and the second address included in the second message, storage means for storing the first address and the second address in association with each other on the basis of an analysis result obtained by the second analyzing means, and fifth transmission means for transmitting, on the basis of the first address and the second address stored in association with each other, the first message including the first address sent from the information providing apparatus to the second address.

In the aforementioned information processing system, the information providing apparatus generates a first address temporarily used for reporting predetermined information and transmits the first address to the first electronic device. When reporting predetermined information to the user, the information providing apparatus generates the predetermined information, and generates, on the basis of the first address and the predetermined information, a first message including the first address and the predetermined information as data for providing the predetermined information to the user, and transmits the generated first message to the information processing apparatus. The first electronic device receives the first address transmitted from the information providing apparatus, stores the first address, and transmits the stored first address to the second electronic device in response to a request from the second electronic device. The second electronic device generates, based on the first address transmitted from the first electronic device, a second message including the first address and a second address, which is the address of the second electronic device, as data for transmitting the first message to the information processing apparatus, and transmits the generated second message to the information processing apparatus. The second electronic device then receives the first message from the information processing apparatus, analyzes the predetermined information included in the first message, and reports the predetermined information included in the first message to the user on the basis of an analysis result. Then, the information processing apparatus receives the second message transmitted from the second electronic device, analyzes the first address and the second address included in the second message, and stores the first address and the second address in association with each other on the basis of an analysis result. The information processing apparatus then transmits, on the basis of the first address and the second address, the first message including the first address transmitted from the information providing apparatus, to the second address.

According to another embodiment of the present invention, there is provided an information providing apparatus including first generation means for generating an address temporarily used for reporting predetermined information to a user, first transmission means for transmitting the address to an electronic device, generation means for generating the predetermined information when reporting the predetermined information to the user, second generation means for generating, on the basis of the address and the predetermined information, a message including the address and the predetermined information as data for providing the predetermined information to the user, and second transmission means for transmitting the generated message to an information processing apparatus that transfers the message to an electronic device.

The first generation means may generate the address from random numbers and a value identifying the information providing apparatus.

The first transmission means may transmit, together with the address, category information indicating the type of predetermined information to the electronic device, the second generation means may generate a message including the category information, and the second transmission means may transmit the generated message to the information processing apparatus.

According to another embodiment of the present invention, there is provided an information providing method including the steps of generating an address temporarily used for reporting predetermined information to a user, controlling the transmission of the address to an electronic device, generating the predetermined information when reporting the predetermined information to the user, generating, on the basis of the address and the predetermined information, a message including the address and the predetermined information as data for providing the predetermined information to the user, and controlling the transmission of the generated message to an information processing apparatus that transfers the message to an electronic device.

A program recorded on a recording medium according to an embodiment of the present invention includes the steps of generating an address temporarily used for reporting predetermined information to a user, controlling the transmission of the address to an electronic device, generating the predetermined information when reporting the predetermined information to the user, generating, on the basis of the address and the predetermined information, a message including the address and the predetermined information as data for providing the predetermined information to the user, and controlling the transmission of the generated message to an information processing apparatus that transfers the message to an electronic device.

A program according to an embodiment of the present invention includes the steps of generating an address temporarily used for reporting predetermined information to a user, controlling the transmission of the address to an electronic device, generating the predetermined information when reporting the predetermined information to the user, generating, on the basis of the address and the predetermined information, a message including the address and the predetermined information as data for providing the predetermined information to the user, and controlling the transmission of the generated message to an information processing apparatus that transfers the message to an electronic device.

According to the aforementioned information providing apparatus, information providing method, recording medium, and program, an address temporarily used for reporting predetermined information to a user is generated, and is transmitted to an electronic device. When reporting predetermined information to the user, the predetermined information is generated, and on the basis of the address and the predetermined information, a message including the address and the predetermined information is generated as data for providing the predetermined information to the user. The generated message is then transmitted to the information processing apparatus for transferring the message to an electronic device.

According to another embodiment of the present invention, there is provided an electronic device including reception means for receiving an address which is transmitted from an information providing apparatus for providing predetermined information and which is temporarily used for reporting the predetermined information, storage means for storing the received address, and transmission means for transmitting the stored address to a different electronic device in response to a request from the different electronic device.

According to another embodiment of the present invention, there is provided an information processing method including the steps of: controlling the reception of an address which is transmitted from an information providing apparatus for providing predetermined information and which is temporarily used for reporting the predetermined information, storing the received address, and controlling the transmission of the stored address to an electronic device in response to a request from the electronic device.

A program recorded on a recording medium according to an embodiment of the present invention includes the steps of controlling the reception of an address which is transmitted from an information providing apparatus for providing predetermined information and which is temporarily used for reporting the predetermined information, storing the received address, and controlling the transmission of the stored address to an electronic device in response to a request from the electronic device.

A program according to an embodiment of the present invention includes the steps of controlling the reception of an address which is transmitted from an information providing apparatus for providing predetermined information and which is temporarily used for reporting the predetermined information, storing the received address, and controlling the transmission of the stored address to an electronic device in response to a request from the electronic device.

According to the aforementioned electronic device, information processing method, recording medium, and program, an address temporarily used for reporting predetermined information and transmitted from the information providing apparatus for providing the predetermined information is received and stored. The stored address is transmitted to another electronic device in response to a request from that electronic device.

According to another embodiment of the present invention, there is provided an electronic device including generation means for generating, on the basis of a first address transmitted from another electronic device and temporarily used for reporting predetermined information, a first message including the first address and a second address, which is an address of the electronic device, transmission means for transmitting the generated first message to the information processing apparatus, reception means for receiving a second message, which is data for providing the predetermined information to a user, transmitted from the information processing apparatus, analyzing means for analyzing, on the basis of the received second message, the predetermined information included in the second message, and reporting means for reporting the predetermined information included in the second message to the user on the basis of an analysis result obtained by the analyzing means.

The electronic device may further include selection means for selecting and allocating, if the second message transmitted from the information processing apparatus includes category information indicating the type of predetermined information, the second message according to the category information. The reporting means may report the predetermined information included in the second message on the basis of the allocated second message.

According to another embodiment of the present invention, there is provided an information processing method including the steps of generating, on the basis of a first address transmitted from an electronic device and temporarily used for reporting predetermined information, a first message including the first address and a second address, which is an address of an electronic device, controlling the transmission of the generated first message to the information processing apparatus, controlling the reception of a second message, which is data for providing the predetermined information to a user, transmitted from the information processing apparatus, analyzing, on the basis of the received second message, the predetermined information included in the second message, and reporting the predetermined information included in the second message to the user on the basis of an analysis result obtained in the analyzing step.

A program recorded on a recording medium according to an embodiment of the present invention includes the steps of generating, on the basis of a first address transmitted from an electronic device and temporarily used for reporting predetermined information, a first message including the first address and a second address, which is an address of an electronic device, controlling the transmission of the generated first message to the information processing apparatus, controlling the reception of a second message, which is data for providing the predetermined information to a user, transmitted from the information processing apparatus, analyzing, on the basis of the received second message, the predetermined information included in the second message, and reporting the predetermined information included in the second message to the user on the basis of an analysis result obtained in the analyzing step.

A program according to an embodiment of the present invention includes the steps of generating, on the basis of a first address transmitted from an electronic device and temporarily used for reporting predetermined information, a first message including the first address and a second address, which is an address of an electronic device, controlling the transmission of the generated first message to the information processing apparatus, controlling the reception of a second message, which is data for providing the predetermined information to a user, transmitted from the information processing apparatus, analyzing, on the basis of the received second message, the predetermined information included in the second message, and reporting the predetermined information included in the second message to the user on the basis of an analysis result obtained in the analyzing step.

According to the aforementioned electronic device, information processing method, recording medium, and program, on the basis of the first address temporarily used for reporting predetermined information and transmitted from another electronic device, a first message including the first address and a second address, which is the address of the electronic device, is generated, and is transmitted to the information processing apparatus. A second message, which is data for providing the predetermined information to the user, transmitted from the information processing apparatus, is received. The predetermined information included in the second message is then analyzed, and reported to the user on the basis of an analysis result.

According to another embodiment of the present invention, there is provided an information processing apparatus including reception means for receiving a first message including a first address temporarily used for reporting predetermined information and a second address, which is an address of an electronic device, transmitted from an electronic device, analyzing means for analyzing, on the basis of the received first message, the first address and the second address included in the first message, storage means for storing the first address and the second address in association with each other on the basis of an analysis result obtained by the analyzing means, and transmission means for transmitting to the second address, on the basis of the first address and the second address stored in association with each other, a second message including the first address, which is data for providing the predetermined information to a user, transmitted from an information providing apparatus for providing the predetermined information.

The storage means may further store transfer information indicating the number by which the second message is transmitted to the electronic device in association with the first address, and the transmission means may transmit the second message to the second address associated with the first address included in the second message on the basis of the transfer information.

According to an embodiment of the present invention, there is provided an information processing method including the steps of controlling the reception of a first message including a first address temporarily used for reporting predetermined information and a second address, which is an address of an electronic device, transmitted from the electronic device, analyzing, on the basis of the received first message, the first address and the second address included in the first message, storing the first address and the second address in association with each other on the basis of an analysis result obtained in the analyzing step, and controlling, on the basis of the first address and the second address stored in association with each other, the transmission to the second address of a second message including the first address, which is data for providing the predetermined information to a user, transmitted from an information providing apparatus for providing the predetermined information.

A program recorded on a recording medium according to an embodiment of the present invention includes the steps of controlling the reception of a first message including a first address temporarily used for reporting predetermined information and a second address, which is an address of the electronic device, transmitted from the electronic device, analyzing, on the basis of the received first message, the first address and the second address included in the first message, storing the first address and the second address in association with each other on the basis of an analysis result obtained in the analyzing step, and controlling, on the basis of the first address and the second address stored in association with each other, the transmission to the second address of a second message including the first address, which is data for providing the predetermined information to a user, transmitted from an information providing apparatus for providing the predetermined information.

A program according to an embodiment of the present invention includes the steps of controlling the reception of a first message including a first address temporarily used for reporting predetermined information and a second address, which is an address of an electronic device, transmitted from the electronic device, analyzing, on the basis of the received first message, the first address and the second address included in the first message, storing the first address and the second address in association with each other on the basis of an analysis result obtained in the analyzing step, and controlling, on the basis of the first address and the second address stored in association with each other, the transmission to the second address of a second message including the first address, which is data for providing the predetermined information to a user, transmitted from an information providing apparatus for providing the predetermined information.

According to the aforementioned information processing apparatus, information processing method, recording medium, and program, a first message including a first address temporarily used for reporting predetermined information and a second address, which is the address of an electronic device, transmitted from the electronic device is received. The first address and the second address included in the first message are then analyzed and are stored in association with each other on the basis of an analysis result. On the basis of the first address and the second address, a second message including the first address, which is data for providing the predetermined information to the user, transmitted from the information providing apparatus, is transmitted to the second address.

According to another embodiment of the present invention, there is provided an electronic device including first reception means for receiving a first address which is transmitted from an information providing apparatus for providing predetermined information and which is temporarily used for reporting the predetermined information, generation means for generating, on the basis of the received first address, a first message including the first address and a second address, which is an address of the electronic device, transmission means for transmitting the generated first message to the information processing apparatus, second reception means for receiving a second message, which is data for providing the predetermined information to a user, transmitted from the information processing apparatus, analyzing means for analyzing, on the basis of the received second message, the predetermined information included in the second message, and reporting means for reporting the predetermined information included in the second message to the user on the basis of an analysis result obtained by the analyzing means.

The electronic device may further include selection means for selecting and allocating, if the second message transmitted from the information processing apparatus includes category information indicating the type of predetermined information, the second message according to the category information. The reporting means may report the predetermined information included in the second message on the basis of the allocated second message.

According to another embodiment of the present invention, there is provided an information processing method including the steps of controlling the reception of a first address which is transmitted from an information providing apparatus for providing predetermined information and which is temporarily used for reporting the predetermined information, generating, on the basis of the received first address, a first message including the first address and a second address, which is an address of an electronic device, controlling the transmission of the generated first message to an information processing apparatus, controlling the reception of a second message, which is data for providing the predetermined information to a user, transmitted from the information processing apparatus, analyzing, on the basis of the received second message, the predetermined information included in the second message, and reporting the predetermined information included in the second message to the user on the basis of an analysis result obtained in the analyzing step.

A program recorded on a recording medium according to an embodiment of the present invention includes the steps of controlling the reception of a first address which is transmitted from an information providing apparatus for providing predetermined information and which is temporarily used for reporting the predetermined information, generating, on the basis of the received first address, a first message including the first address and a second address, which is an address of an electronic device, controlling the transmission of the generated first message to an information processing apparatus, controlling the reception of a second message, which is data for providing the predetermined information to a user, transmitted from the information processing apparatus, analyzing, on the basis of the received second message, the predetermined information included in the second message, and reporting the predetermined information included in the second message to the user on the basis of an analysis result obtained in the analyzing step.

A program according to an embodiment of the present invention includes the steps of controlling the reception of a first address which is transmitted from an information providing apparatus for providing predetermined information and which is temporarily used for reporting the predetermined information, generating, on the basis of the received first address, a first message including the first address and a second address, which is an address of an electronic device, controlling the transmission of the generated first message to an information processing apparatus, controlling the reception of a second message, which is data for providing the predetermined information to a user, transmitted from the information processing apparatus, analyzing, on the basis of the received second message, the predetermined information included in the second message, and reporting the predetermined information included in the second message to the user on the basis of an analysis result obtained in the analyzing step.

According to the aforementioned electronic device, information processing method, recording medium, and program, a first address temporarily used for reporting predetermined information and transmitted from the information providing apparatus for providing the predetermined information is received. On the basis of the received first address, a first message including the first address and a second address, which is the address of the electronic device, is generated and is transmitted to the information processing apparatus. A second message, which is data for providing the predetermined information to the user, transmitted from the information processing apparatus is received. The predetermined information included in the second message is then analyzed and is reported to the user on the basis of an analysis result.

According to an embodiment of the present invention, predetermined information provided by a service provider can be obtained. Additionally, a leakage of personal information can be prevented, and a user can use predetermined services with high security.

### BRIEF DESCRIPTION OF THE DRAWINGS

Fig. 1 is a block diagram illustrating a communication system according to an embodiment of the present invention;
Fig. 2 is a block diagram illustrating the functional configuration of an IC card;
Fig. 3 is a block diagram illustrating the functional configuration of a service providing terminal;
Fig. 4 is a block diagram illustrating the detailed configuration of a reader/writer;
Fig. 5 is a block diagram illustrating the functional configuration of a service using terminal;
Fig. 6 is a block diagram illustrating the functional configuration of a domain management server;
Fig. 7 is a block diagram illustrating an example of the configuration of a domain management server;
Fig. 8 is a flowchart illustrating the overall processing of the communication system;
Fig. 9 is a flowchart illustrating data sending/receiving processing performed by an IC card;
Fig. 10 illustrates an example of information set in an IC card;
Fig. 11 illustrates an example of information received by an IC card;
Fig. 12 is a flowchart illustrating data sending/receiving processing performed by a service providing terminal;
Fig. 13 illustrates an example of a service providing terminal message;
Fig. 14 is a flowchart illustrating data sending/receiving processing performed by a domain management server;
Fig. 15 illustrates an example of a service using terminal message;
Fig. 16 illustrates an example of a transfer table;
Fig. 17 is a flowchart illustrating data sending/receiving processing performed by a service using terminal;
Fig. 18 illustrates an example of the screen of a reporting unit that displays a service providing terminal message;
Fig. 19 is a block diagram illustrating the configuration of a communication system according to an embodiment of the present invention;
Fig. 20 is a block diagram illustrating the functional configuration of a portable terminal;
Fig. 21 is a flowchart illustrating data sending/receiving processing performed by a portable terminal;
Fig. 22 illustrates an example of the screen of a reporting unit that displays a service providing terminal message;
Fig. 23 is a block diagram illustrating the configuration of a communication system according to an embodiment of the present invention;
Fig. 24 is a block diagram illustrating the functional configuration of a transfer server;
Fig. 25 is a flowchart illustrating data sending/receiving processing performed by a transfer server;
Fig. 26 illustrates an example of a transfer table; and
Fig. 27 illustrates an example of the configuration of a communication system provided with a transfer server.

### DESCRIPTION OF THE PREFERRED EMBODIMENTS

Before describing an embodiment of the present invention, the correspondence between the features of the invention and an embodiment of the present invention is discussed below. Even if an element in this specification is not described as relating to a certain feature of the present invention, that does not necessarily mean that the element does not relate to that feature of the invention. Conversely, even if an element is described herein as relating to a certain feature of the invention, that does not necessarily mean that the element does not relate to other features of the invention.

Furthermore, this description should not be construed as restricting that all the aspects of the invention disclosed in the specification are described. That is, the description does not deny the existence of aspects of the present invention that are described in the specification but not claimed in the invention of this application, i.e., the existence of aspects of the present invention that in future may be claimed by a divisional application, or that may be additionally claimed through amendments.

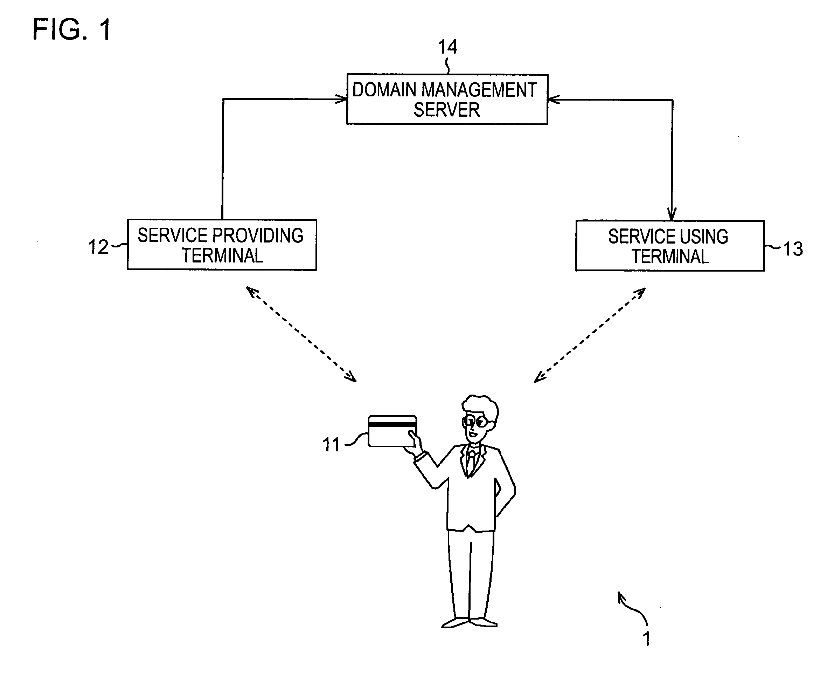

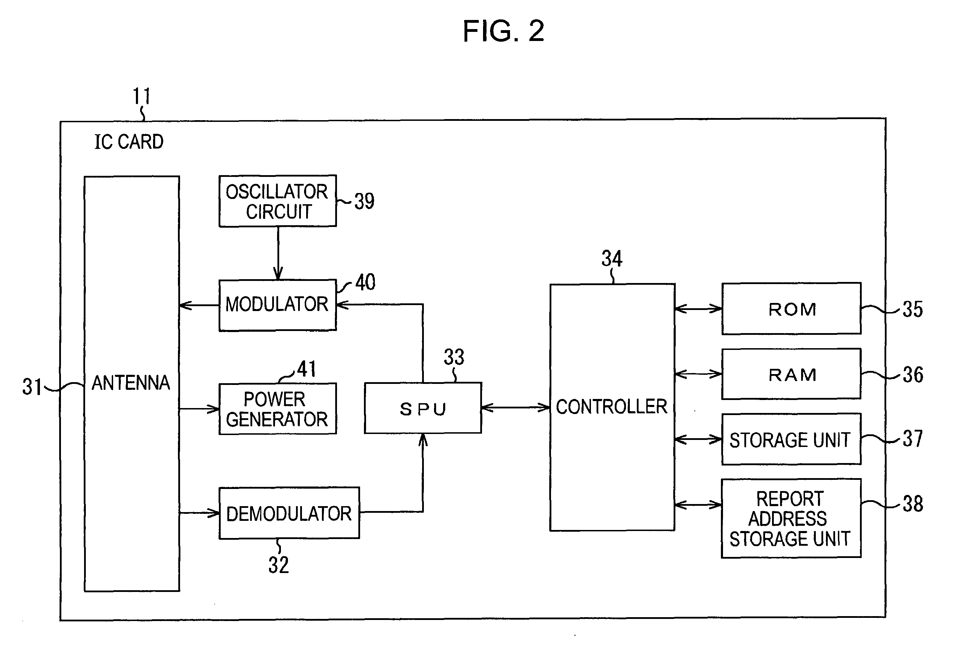

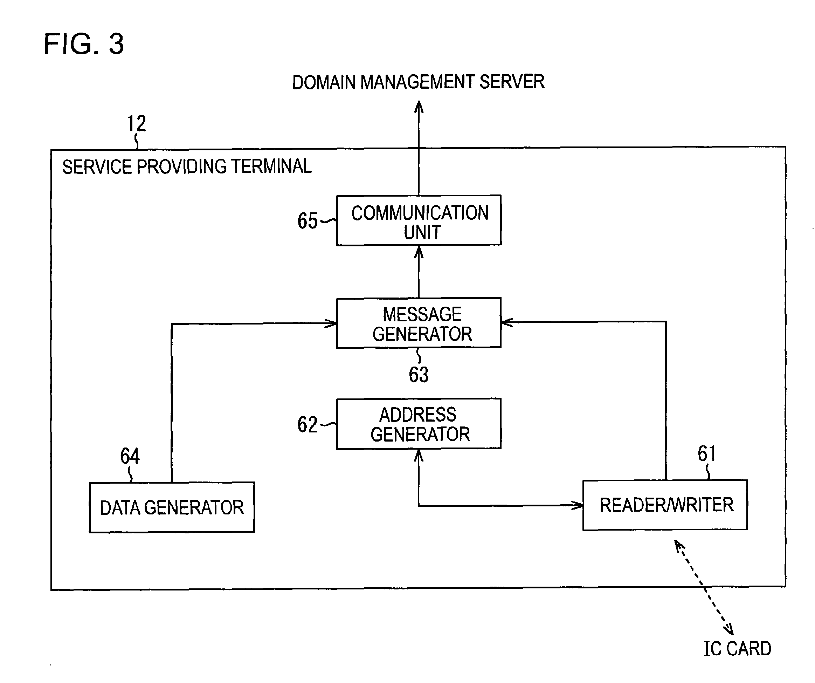

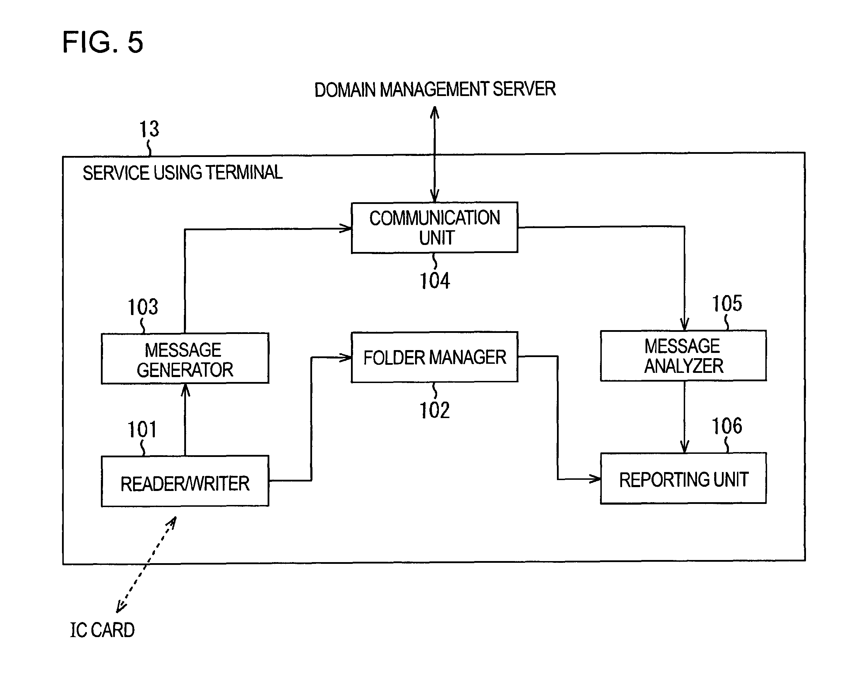

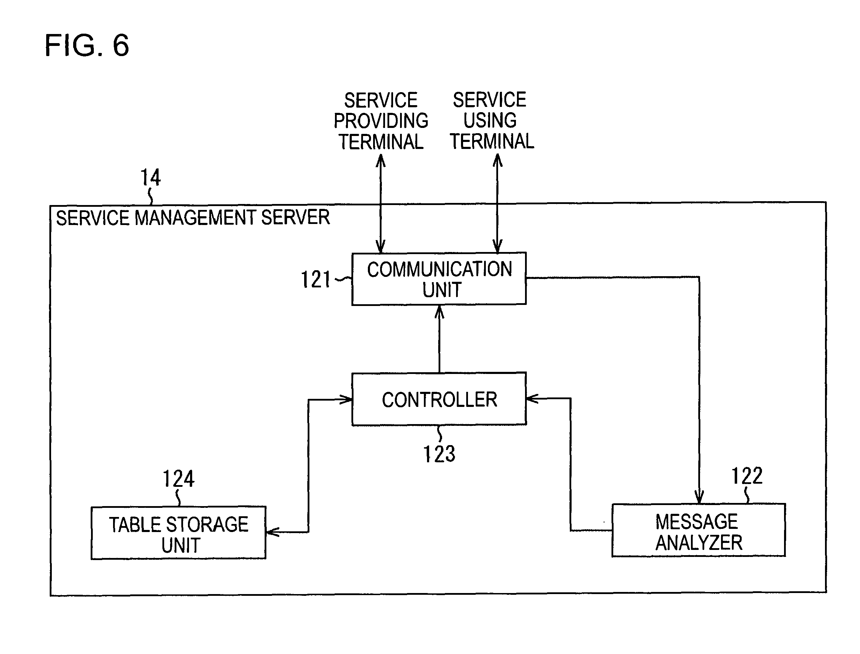

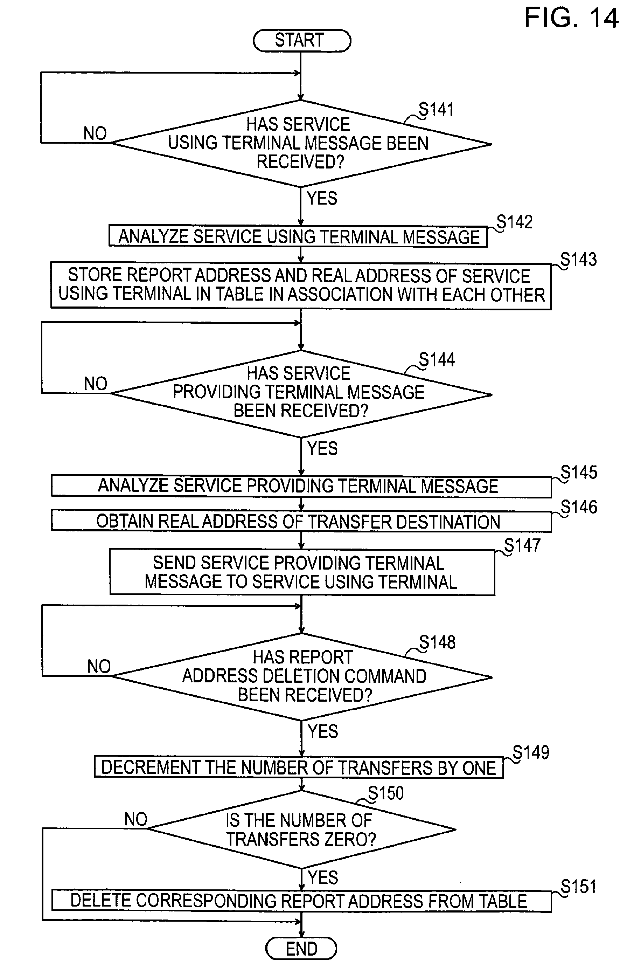

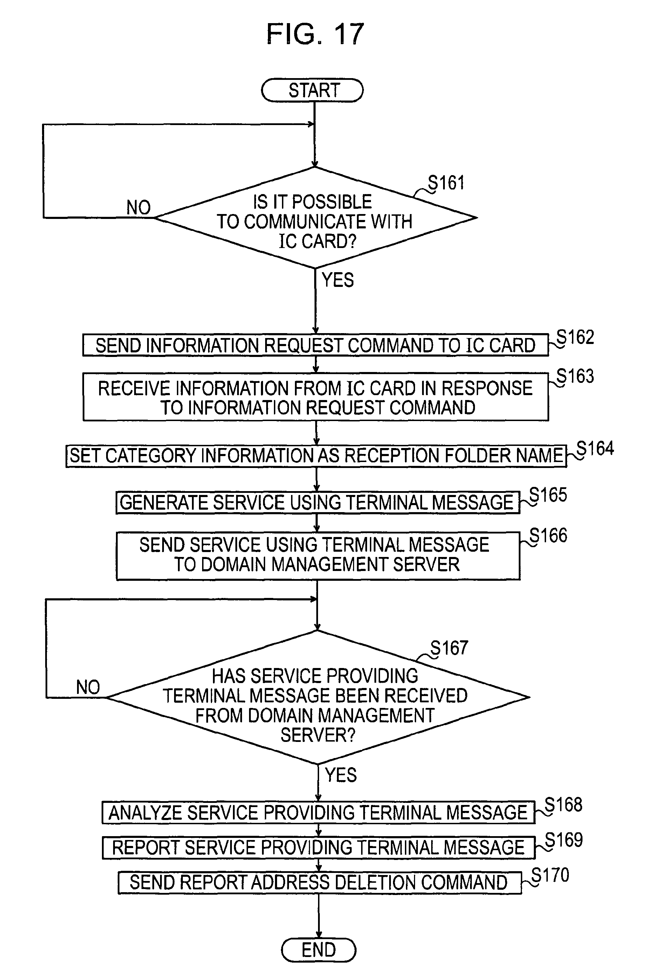

According to an embodiment of the present invention, an information processing system (for example, a communication system 1 shown in Fig. 1) is provided. The information processing system includes an information providing apparatus (for example, a service providing terminal 12 shown in Fig. 1), a first electronic device (for example, an IC card 11 shown in Fig. 1), a second electronic device (for example, a service using terminal 13 shown in Fig. 1), and an information processing apparatus (for example, a domain management server 14 shown in Fig. 1). The information providing apparatus (for example, the service providing terminal 12 shown in Fig. 1) includes first generation means (for example, an address generator 62 shown in Fig. 3) for generating a first address (for example, a report address) temporarily used for reporting predetermined information to a user, first transmission means (for example, a reader/writer 61 shown in Fig. 3) for transmitting the first address to the first electronic device (for example, the IC card 11 shown in Fig. 1), generation means (for example, a data generator 64 shown in Fig. 3) for generating the predetermined information (for example, report data) when reporting the predetermined information to the user, second generation means (for example, a message generator 63 shown in Fig. 3) for generating, on the basis of the first address and the predetermined information, a first message (for example, a service providing terminal message) including the first address and the predetermined information as data for providing the predetermined information to the user, and second transmission means (for example, a communication unit 65 shown in Fig. 3) for transmitting the generated first message to the information processing apparatus (for example, the domain management server 14 shown in Fig. 1). The first electronic device (for example, the IC card 11 shown in Fig. 1) includes first reception means (for example, a demodulator 32 shown in Fig. 2) for receiving the first address sent from the information providing apparatus (for example, the service providing terminal 12 shown in Fig. 1), storage means (for example, a report address storage unit 38 shown in Fig. 2) for storing the received first address, and third transmission means (for example, a modulator 40 shown in Fig. 2) for transmitting the stored first address to the second electronic device (for example, the service using terminal 13 shown in Fig. 1) in response to a request from the second electronic device. The second electronic (for example, the service using terminal 13 shown in Fig. 1) device includes third generation means (for example, a message generator 103 shown in Fig. 5) for generating, on the basis of the first address sent from the first electronic device, a second message (for example, a service using terminal message) including the first address and a second address (for example, an email address of the service using terminal 13), which is an address of the second electronic device, as data for transmitting the first message to the information processing apparatus, fourth transmission means (for example, a communication unit 104 shown in Fig. 5 that executes step S166 in Fig. 17) for transmitting the generated second message to the information processing apparatus, second reception means (for example, the communication unit 104 shown in Fig. 5 that executes step S167 in Fig. 17) for receiving the first message sent from the information processing apparatus, first analyzing means (for example, a message analyzer 105 shown in Fig. 5) for analyzing, on the basis of the received first message, the predetermined information included in the first message, and reporting means (for example, a communication unit 106 shown in Fig. 5) for reporting the predetermined information included in the first message to the user on the basis of an analysis result obtained by the first analyzing means. The information processing apparatus (for example, the domain management server 14 shown in Fig. 1) includes third reception means (for example, a communication unit 121 shown in Fig. 6 that executes step S141 in Fig. 14) for receiving the second message sent from the second electronic device, second analyzing means (for example, a message analyzer 122 shown in Fig. 6) for analyzing, on the basis of the received second message, the first address and the second address included in the second message, storage means (for example, a table storage unit 124 shown in Fig. 6) for storing the first address and the second address in association with each other on the basis of an analysis result obtained by the second analyzing means, and fifth transmission means (for example, a communication unit 121 shown in Fig. 6 that executes step S147 in Fig. 14) for transmitting, on the basis of the first address and the second address stored in association with each other, the first message including the first address sent from the information providing apparatus to the second address.

According to an embodiment of the present invention, an information providing apparatus (for example, the service providing terminal 12 shown in Fig. 1) is provided. The information providing apparatus includes first generation means (for example, the address generator 62 shown in Fig. 3) for generating an address (for example, a report address) temporarily used for reporting predetermined information to a user, first transmission means (for example, the reader/writer 61 shown in Fig. 3) for transmitting the address to an electronic device (for example, the IC card 11 shown in Fig. 1), generation means (for example, the data generator 64 shown in Fig. 3) for generating the predetermined information (for example, report data) when reporting the predetermined information to the user, second generation means (for example, the message generator 63 shown in Fig. 3) for generating, on the basis of the address and the predetermined information, a message (for example, a service providing terminal message) including the address and the predetermined information as data for providing the predetermined information to the user, and second transmission means (for example, the communication unit 65 shown in Fig. 3) for transmitting the generated message to an information processing apparatus (for example, the domain management server 14 shown in Fig. 1) that transfers the message to the electronic device.

The first generation means may generate the address from random numbers and a value identifying the information providing apparatus.

The first transmission means may transmit, together with the address, category information indicating the type of predetermined information to the electronic device (for example, the IC card 11 shown in Fig. 1). The second generation means may generate a message including the category information. The second transmission means may transmit the generated message to the information processing apparatus (for example, the domain management server 14 shown in Fig. 1).

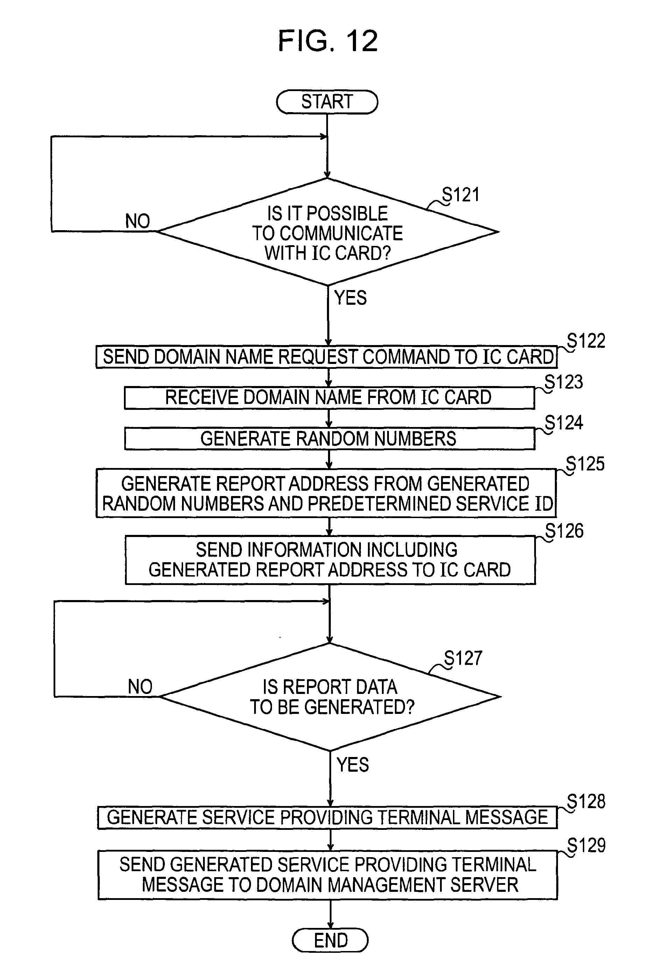

According to an embodiment of the present invention, an information providing method is provided. The information providing method includes the steps of generating an address temporarily used for reporting predetermined information to a user (for example, step S125 in Fig. 12), controlling the transmission of the address to an electronic device (for example, step S126 in Fig. 12), generating the predetermined information when reporting the predetermined information to the user (for example, step S127 in Fig. 12), generating, on the basis of the address and the predetermined information, a message including the address and the predetermined information as data for providing the predetermined information to the user (for example, step S128 in Fig. 12), and controlling the transmission of the generated message to an information processing apparatus that transfers the message to the electronic device (for example, step S129 in Fig. 12).

According to an embodiment of the present invention, a program is provided. The program includes the steps of generating an address temporarily used for reporting predetermined information to a user (for example, step S125 in Fig. 12), controlling the transmission of the address to an electronic device (for example, step S126 in Fig. 12), generating the predetermined information when reporting the predetermined information to the user (for example, step S127 in Fig. 12), generating, on the basis of the address and the predetermined information, a message including the address and the predetermined information as data for providing the predetermined information to the user (for example, step S128 in Fig. 12), and controlling the transmission of the generated message to an information processing apparatus that transfers the message to the electronic device (for example, step S129 in Fig. 12).

According to an embodiment of the present invention, an electronic device (for example, the IC card 11 shown in Fig. 1) is provided. The electronic device includes reception means (for example, the demodulator 32 shown in Fig. 2) for receiving an address (for example, a report address) which is transmitted from an information providing apparatus (for example, the service providing terminal 12 shown in Fig. 1) for providing predetermined information and which is temporarily used for reporting the predetermined information, storage means (for example, the report address storage unit 38 shown in Fig. 2) for storing the received address, and transmission means (for example, the modulator 40 shown in Fig. 2) for transmitting the stored address to a different electronic device (for example, the service using terminal 13 shown in Fig. 1) in response to a request from the different electronic device.

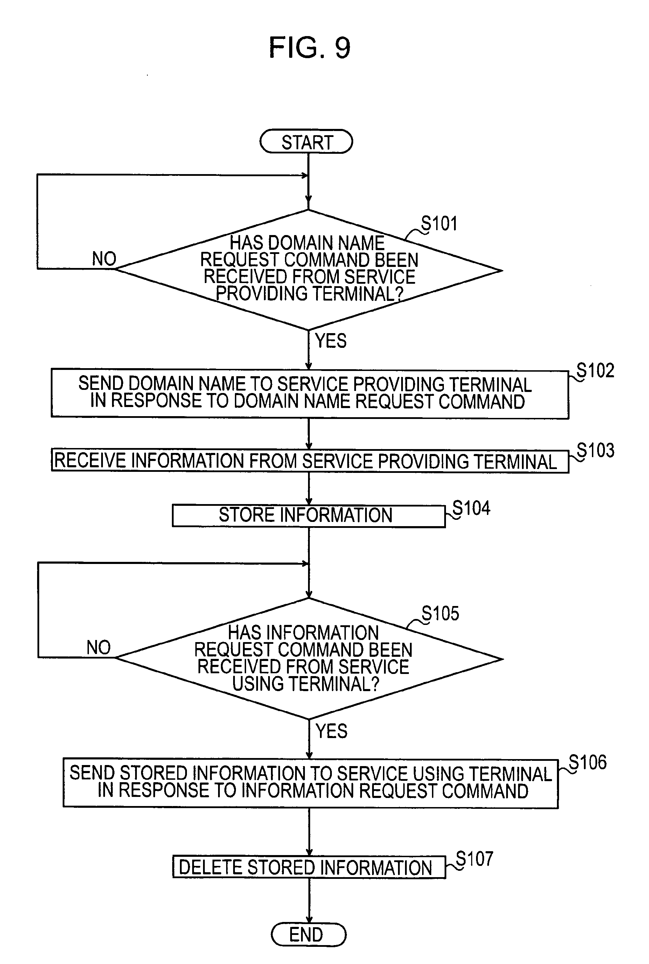

According to an embodiment of the present invention, an information processing method is provided. The information processing method includes the steps of controlling the reception of an address which is transmitted from an information providing apparatus that provides predetermined information and which is temporarily used for reporting the predetermined information (for example, step S103 in Fig. 9), storing the received address (for example, step S104 in Fig. 9), and controlling the transmission of the stored address to a different electronic device in response to a request from the different electronic device (for example, step S106 in Fig. 9).

According to an embodiment of the present invention, a program is provided. The program includes the steps of controlling the reception of an address which is transmitted from an information providing apparatus that provides predetermined information and which is temporarily used for reporting the predetermined information (for example, step S103 in Fig. 9), storing the received address (for example, step S104 in Fig. 9), and controlling the transmission of the stored address to a different electronic device in response to a request from the different electronic device (for example, step S106 in Fig. 9).

According to an embodiment of the present invention, an electronic device (for example, the service using terminal 13 shown in Fig. 1) is provided. The electronic device includes generation means (for example, the message generator 103 shown in Fig. 5) for generating, on the basis of a first address (for example, a report address) transmitted from another electronic device (for example, the IC card 11 shown in Fig. 1) and temporarily used for reporting predetermined information, a first message (for example, a service using terminal message) including the first address and a second address, which is an address of the electronic device, transmission means (for example, the communication unit 104 shown in Fig. 5 that executes step S166 in Fig. 17) for transmitting the generated first message to the information processing apparatus (for example, the domain management server 14 shown in Fig. 1), reception means (for example, the communication unit 104 shown in Fig. 5 that executes step S167 in Fig. 17) for receiving a second message (for example, a service providing terminal message), which is data for providing the predetermined information to a user, transmitted from the information processing apparatus, analyzing means (for example, the message analyzer 105 shown in Fig. 5) for analyzing, on the basis of the received second message, the predetermined information included in the second message, and reporting means (for example, the reporting unit 106 shown in Fig. 5) for reporting the predetermined information included in the second message to the user on the basis of an analysis result obtained by the analyzing means.

The electronic device may further include selection means (for example, a folder manager 102 shown in Fig. 5) for selecting and allocating, if the second message transmitted from the information processing apparatus includes category information indicating the type of predetermined information, the second message according to the category information. The reporting means may report the predetermined information included in the second message on the basis of the allocated second message.

According to an embodiment of the present invention, an information processing method is provided. The information processing method includes the steps of generating, on the basis of a first address transmitted from an electronic device and temporarily used for reporting predetermined information, a first message including the first address and a second address, which is an address of an electronic device (for example, step S165 in Fig. 17), controlling the transmission of the generated first message to an information processing apparatus (for example, step S166 in Fig. 17), controlling the reception of a second message, which is data for providing the predetermined information to a user, transmitted from the information processing apparatus (for example, step S167 in Fig. 17), analyzing, on the basis of the received second message, the predetermined information included in the second message (for example, step S168 in Fig. 17), and reporting the predetermined information included in the second message to the user on the basis of an analysis result obtained in the analyzing step (for example, step S169 in Fig. 17).

According to an embodiment of the present invention, a program is provided. The program includes the steps of generating, on the basis of a first address transmitted from an electronic device and temporarily used for reporting predetermined information, a first message including the first address and a second address, which is an address of an electronic device (for example, step S165 in Fig. 17), controlling the transmission of the generated first message to an information processing apparatus (for example, step S166 in Fig. 17), controlling the reception of a second message, which is data for providing the predetermined information to a user, transmitted from the information processing apparatus (for example, step S167 in Fig. 17), analyzing, on the basis of the received second message, the predetermined information included in the second message (for example, step S168 in Fig. 17), and reporting the predetermined information included in the second message to the user on the basis of an analysis result obtained in the analyzing step (for example, step S169 in Fig. 17).

According to an embodiment of the present invention, an information processing apparatus (for example, the domain management server 14 shown in Fig. 1) is provided. The information processing apparatus includes reception means (for example, the communication unit 121 shown in Fig. 6 that executes step S141 in Fig. 14) for receiving a first message (for example, a service using terminal message) including a first address (for example, a report address) temporarily used for reporting predetermined information and a second address (for example, an email address of the service using terminal 13), which is an address of an electronic device, transmitted from an electronic device (for example, the service using terminal 13 shown in Fig. 1), analyzing means (for example, the message analyzer 122 shown in Fig. 6) for analyzing, on the basis of the received first message, the first address and the second address included in the first message, storage means (for example, the table storage unit 124 shown in Fig. 6) for storing the first address and the second address in association with each other on the basis of an analysis result obtained by the analyzing means, and transmission means (for example, the communication unit 121 shown in Fig. 6 that executes step S147 in Fig. 14) for transmitting, on the basis of the first address and the second address stored in association with each other, a second message including the first address, which is data for providing the predetermined information to a user, transmitted from an information providing apparatus for providing the predetermined information to the second address.

The storage means may further store transfer information indicating the number by which the second message is transmitted to the electronic device in association with the first address, and the transmission means may transmit the second message to the second address associated with the first address included in the second message on the basis of the transfer information.

According to an embodiment of the present invention, an information processing method is provided. The information processing method includes the steps of controlling the reception of a first message including a first address temporarily used for reporting predetermined information and a second address, which is an address of an electronic device, transmitted from an electronic device (for example, step S141 in Fig. 14), analyzing, on the basis of the received first message, the first address and the second address included in the first message (for example, step S142 in Fig. 14), storing the first address and the second address in association with each other on the basis of an analysis result obtained in the analyzing step (for example, step S143 in Fig. 14), and controlling, on the basis of the first address and the second address stored in association with each other, the transmission of a second message including the first address, which is data for providing the predetermined information to a user, transmitted from an information providing apparatus for providing the predetermined information to the second address (for example, step S147 in Fig. 14).

According to an embodiment of the present invention, a program is provided. The program includes the steps of controlling the reception of a first message including a first address temporarily used for reporting predetermined information and a second address, which is an address of an electronic device, transmitted from an electronic device (for example, step S141 in Fig. 14), analyzing, on the basis of the received first message, the first address and the second address included in the first message (for example, step S142 in Fig. 14), storing the first address and the second address in association with each other on the basis of an analysis result obtained in the analyzing step (for example, step S143 in Fig. 14), and controlling, on the basis of the first address and the second address stored in association with each other, the transmission of a second message including the first address, which is data for providing the predetermined information to a user, transmitted from an information providing apparatus for providing the predetermined information to the second address (for example, step S147 in Fig. 14).

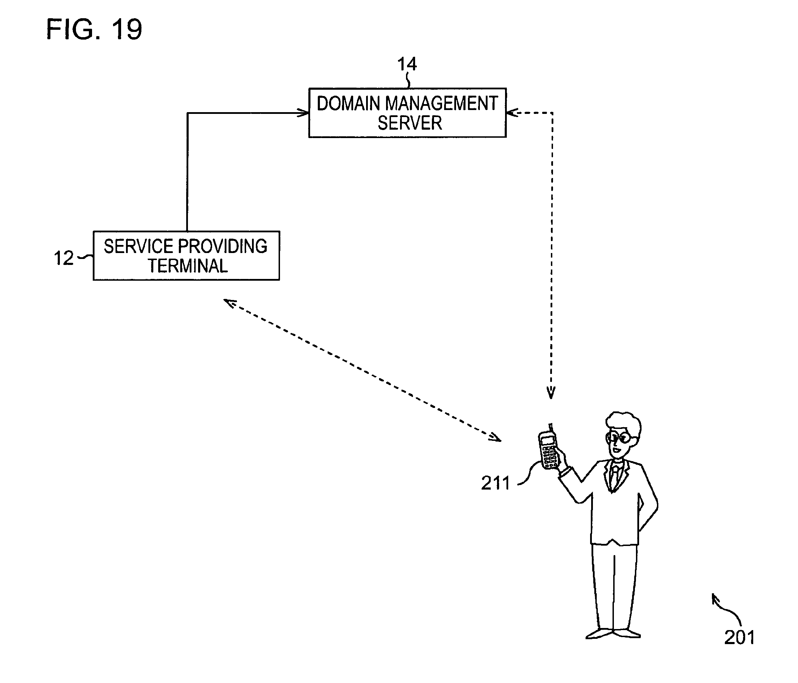

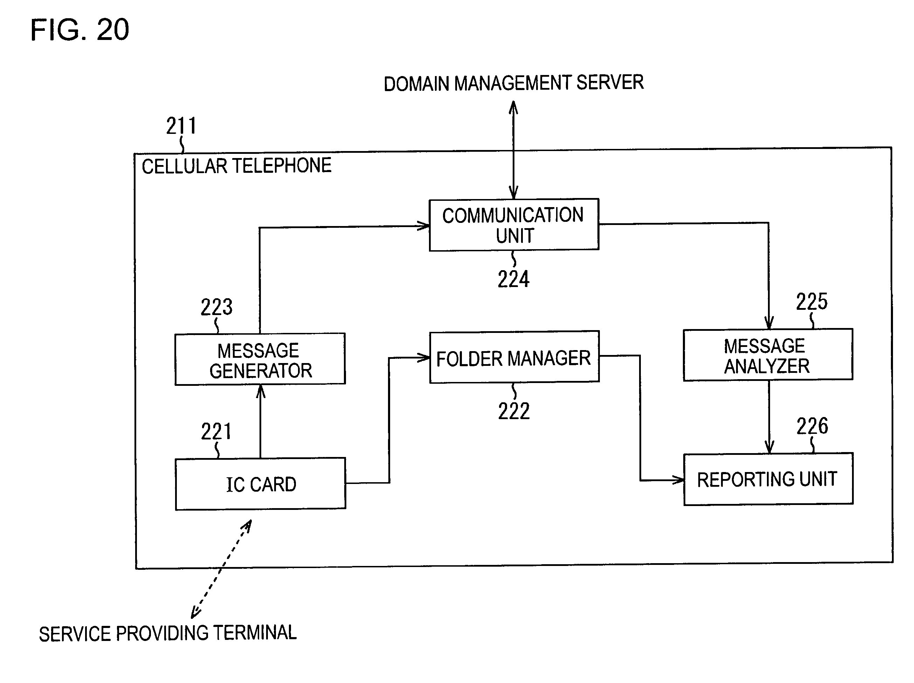

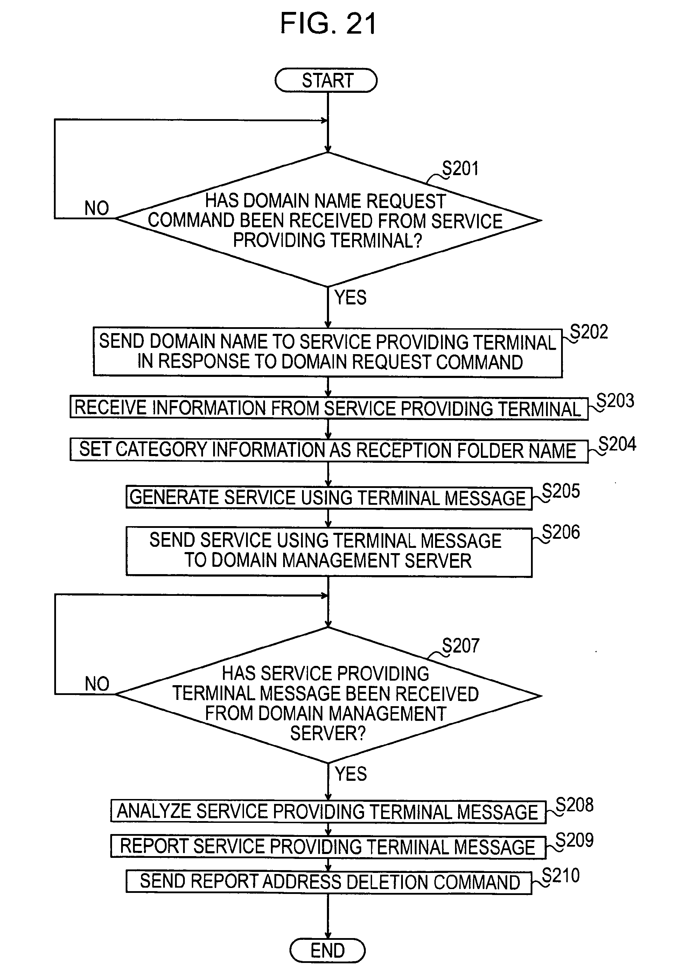

According to an embodiment of the present invention, an electronic device (for example, a portable terminal 211 shown in Fig. 19) is provided. The electronic device includes first reception means (for example, an IC card 211 shown in Fig. 20) for receiving a first address (for example, a report address) which is transmitted from an information providing apparatus for providing predetermined information and which is temporarily used for reporting the predetermined information, generation means (for example, a message generator 223 shown in Fig. 20) for generating, on the basis of the received first address, a first message (for example, a service using terminal message) including the first address and a second address (for example, an email address of the portable terminal 211), which is an address of the electronic device, transmission means (for example, a communication unit 224 shown in Fig. 20 that executes step S206 in Fig. 21) for transmitting the generated first message to an information processing apparatus (for example, the domain management server 14 shown in Fig. 19), second reception means (for example, the communication unit 224 shown in Fig. 20 that executes step S207 in Fig. 21) for receiving a second message (for example, a service providing terminal message), which is data for providing the predetermined information to a user, transmitted from the information processing apparatus, analyzing means (for example, a message analyzer 225 shown in Fig. 20) for analyzing, on the basis of the received second message, the predetermined information included in the second message, and reporting means (for example, a communication unit 226 shown in Fig. 20) for reporting the predetermined information included in the second message to the user on the basis of an analysis result obtained by the analyzing means.

The electronic device may further include selection means (for example, a folder manager 222 shown in Fig. 20) for selecting and allocating, if the second message transmitted from the information processing apparatus includes category information indicating the type of predetermined information, the second message according to the category information. The reporting means reports the predetermined information included in the second message on the basis of the allocated second message.

According to an embodiment of the present invention, an information processing method is provided. The information processing method includes the steps of controlling the reception of a first address which is transmitted from an information providing apparatus for providing predetermined information and which is temporarily used for reporting the predetermined information (for example, step S203 in Fig. 21), generating, on the basis of the received first address, a first message including the first address and a second address, which is an address of an electronic device (for example, step S205 in Fig. 21), controlling the transmission of the generated first message to an information processing apparatus (for example, step S206 in Fig. 21), controlling the reception of a second message, which is data for providing the predetermined information to a user, transmitted from the information processing apparatus (for example, step S207 in Fig. 21), analyzing, on the basis of the received second message, the predetermined information included in the second message (for example, step S208 in Fig. 21), and reporting the predetermined information included in the second message to the user on the basis of an analysis result obtained in the analyzing step (for example, step S209 in Fig. 21).

According to an embodiment of the present invention, a program is provided. The program includes the steps of controlling the reception of a first address which is transmitted from an information providing apparatus for providing predetermined information and which is temporarily used for reporting the predetermined information (for example, step S203 in Fig. 21), generating, on the basis of the received first address, a first message including the first address and a second address, which is an address of an electronic device (for example, step S205 in Fig. 21), controlling the transmission of the generated first message to an information processing apparatus (for example, step S206 in Fig. 21), controlling the reception of a second message, which is data for providing the predetermined information to a user, transmitted from the information processing apparatus (for example, step S207 in Fig. 21), analyzing, on the basis of the received second message, the predetermined information included in the second message (for example, step S208 in Fig. 21), and reporting the predetermined information included in the second message to the user on the basis of an analysis result obtained in the analyzing step (for example, step S209 in Fig. 21).

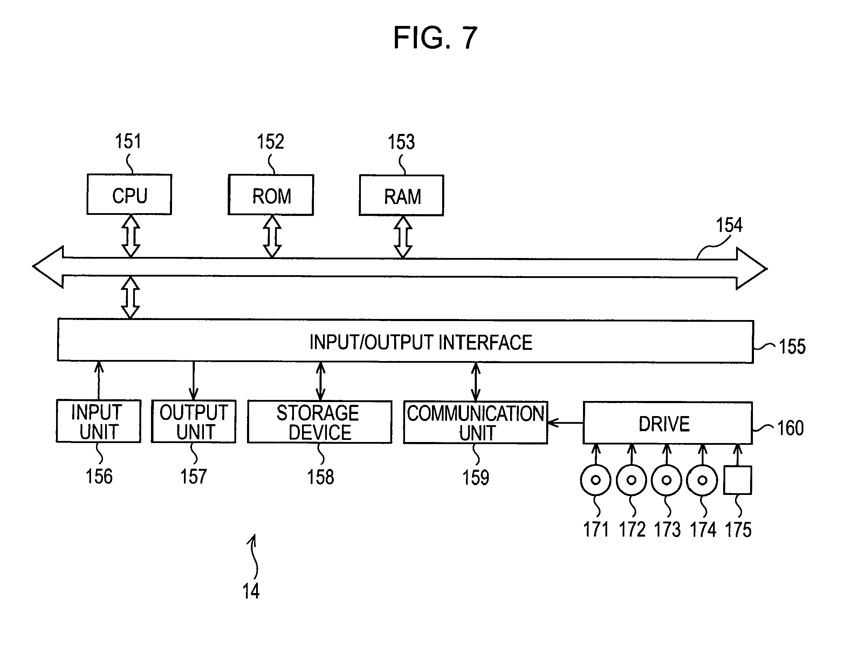

The program may be stored in a recording medium (for example, a magnetic disk 171 shown in Fig. 7).

An embodiment of the present invention is described in detail below with reference to the accompanying drawings.

A communication system 1 shown in Fig. 1 is an example of an information processing system according to an embodiment of the present invention.

The communication system 1 includes an IC card 11, a service providing terminal 12, a service using terminal 13, and a domain management server 14. Data is sent and received between the IC card 11 and the service providing terminal 12 in a contactless manner by using radio waves (electromagnetic waves). Similarly, data is sent and received between the IC card 11 and the service using terminal 13 in a contactless manner by using radio waves (electromagnetic waves).

Communication is performed between the service providing terminal 12 and the domain management server 14 by wired or wireless means via a network (not shown). The same applies to between the service using terminal 13 and the domain management server 14.

Fig. 2 is a block diagram illustrating the functional configuration of the IC card 11.

The IC card 11 includes an antenna 31, a demodulator 32, a signal processing unit (SPU) 33, a controller 34, a read only memory (ROM) 35, a random access memory (RAM) 36, a storage unit 37, a report address storage unit 38, an oscillator circuit 39, a modulator 40, and a power generator 41.

The antenna 31 receives modulation waves (for example, amplitude shift keying (ASK) modulation waves) from the service providing terminal 12 (Fig. 1) as radio waves, and supplies the received modulation waves to the demodulator 32. The antenna 31 also sends modulation waves (for example, ASK modulation waves) supplied from the modulator 40 to the service providing terminal 12 as radio waves by wireless communication. In this case, resonance is produced in the antenna 31 by radio waves having a predetermined frequency radiated from the service providing terminal 12 to generate an electromotive force.

Similarly, the antenna 31 also receives or sends modulation waves from or to the service using terminal 13 (Fig. 1) as radio waves by wireless communication.

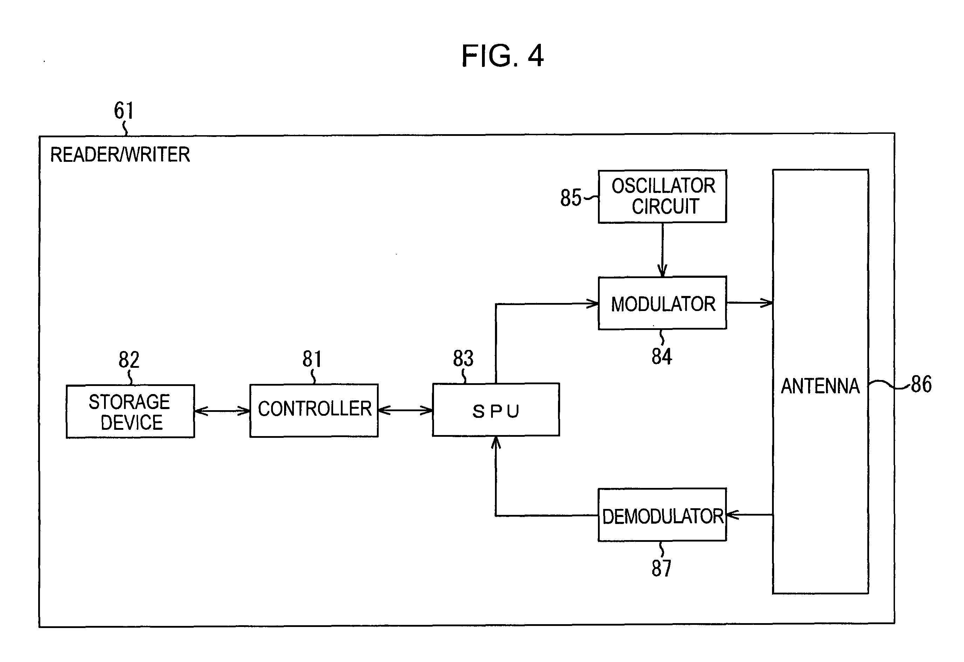

The demodulator 32 demodulates the modulation waves supplied from the antenna 31 according to a demodulation method corresponding to a modulation method used by a modulator 84 of a reader/writer 61 (Fig. 4), which is described below, and supplies the demodulated data to the SPU 33.

The SPU 33 decodes the data supplied from the demodulator 32 according to a predetermined method, and supplies the decoded data to the controller 34. If the data demodulated by the demodulator 32 is coded with the Manchester coding, the SPU 33 decodes the data with the Manchester decoding based on a clock signal supplied from a phase locked loop (PLL) circuit (not shown), and supplies the decoded data to the controller 34.

The SPU 33 also codes data supplied from the controller 34 according to a predetermined coding method and supplies the coded data to the modulator 40. For example, the SPU 33 codes the data supplied from the controller 34 with the Manchester coding and supplies the coded data to the modulator 40.

The controller 34 controls the individual elements of the IC card 11.

The controller 34 executes various commands supplied from the SPU 33. For example, the controller 34 stores information supplied from the service providing terminal 12 in the report address storage unit 38. The controller 34 also reads information from the report address storage unit 38 according to a request command for requesting the provision of the information from the service using terminal 13, and sends the read information to the service using terminal 13.

If necessary, the controller 34 reads a program stored in the ROM 35 and executes it. The controller 34 also supplies data to the RAM 36 or obtains data temporarily stored in the RAM 36 if necessary.

The ROM 35 stores programs and other data necessary for the controller 34 to execute various processing jobs. The ROM 35 supplies the programs and other data to the controller 34.

The RAM 36 temporarily stores data which is being processed by the controller 34. The RAM 36 supplies the data stored therein to the controller 34.

The storage unit 37 is formed of a non-volatile memory, such as a flash memory, an electrically erasable programmable read only memory (EEPROM), a magnetoresistive random access memory (MRAM), or a ferroelectric RAM (FeRAM), and records various data therein.

The report address storage unit 38 is formed of a non-volatile memory, such as a flash memory, an EEPROM, an MRAM, or a FeRAM, and stores or reads report addresses under the control of the controller 34.

The report addresses are values (identifiers) generated by the service providing terminal 12 and stored in the report address storage unit 38. In this embodiment of the present invention, by using the report addresses, the service providing terminal 12 can send predetermined information to the service using terminal 13 without recognizing the address of the service using terminal 13. Details of the report addresses are given below.

The oscillator circuit 39 generates a clock signal having the same frequency as a command received by the antenna 31 and supplies the generated clock signal to the modulator 40. For example, the oscillator circuit 39 has a built-in PLL circuit and generates a clock signal having the same frequency as the clock frequency of a report address.

The modulator 40 generates a carrier wave based on the clock signal of the predetermined frequency supplied from the oscillator circuit 39. The modulator 40 then modulates the data supplied from the SPU 33 based on the carrier wave according to a predetermined method and supplies the modulated data to the antenna 31. For example, the modulator 40 performs ASK modulation on the data coded with the Manchester coding supplied from the SPU 33 and sends the modulated data to the service providing terminal 12 via the antenna 31.

The modulator 40 also turns ON or OFF a predetermined switching device (not shown) for the data supplied from the SPU 33, and changes a load of the antenna 31 by connecting a predetermined load in parallel with the antenna 31 only when the switching device is ON. The ASK-modulated data is sent to the service providing terminal 12 via the antenna 31 by a change in the load of the antenna 31, in other words, the terminal voltage of an antenna 86 of the reader/writer 61 of the service providing terminal 12 is changed.

The power generator 41 generates DC power based on an AC electromotive force generated in the antenna 31, and supplies the generated DC power to the individual elements of the IC card 11.

Fig. 3 is a block diagram illustrating the functional configuration of the service providing terminal 12.

The service providing terminal 12 includes the reader/writer 61, an address generator 62, a message generator 63, a data generator 64, and a communication unit 65.

When the IC card 11 (Fig. 1) is brought into close proximity with the reader/writer 61 by the user, the reader/writer 61 sends and receives data with the IC card in a contactless manner by using radio waves. Details of the reader/writer 61 are given below.

The address generator 62 generates random numbers in response to a request from the reader/writer 61. The address generator 62 then generates a report address from the generated random numbers and a predetermined ID (hereinafter referred to as a "service ID") for specifying the service providing terminal 12. The address generator 62 then supplies the generated report address to the reader/writer 61.

The data generator 64 generates report data and supplies it to the message generator 63. For example, when reporting predetermined information to the user owning the IC card 11 at a certain time, the data generator 64 generates report data and supplies it to the message generator 63.

The message generator 63 generates a service provider terminal message based on the report data supplied from the data generator 64 and the report address supplied from the reader/writer 61. The message generator 63 supplies the generated service provider terminal message to the communication unit 65.

The service provider terminal message is information including a message to be reported to the user owning the IC card 11 and the report address that identifies the user, and details of the service provider terminal message are given below.

The communication unit 65 sends the service providing terminal message supplied from the message generator 63 to the domain management server 14 (Fig. 1).

Fig. 4 is a block diagram illustrating the functional configuration of the reader/writer 61.

The reader/writer 61 includes a controller 81, a storage device 82, an SPU 83, a modulator 84, an oscillator circuit 85, an antenna 86, and a demodulator 87.

The controller 81 controls the individual elements of the reader/writer 61. The controller 81 sends decoded data supplied from the SPU 83 to the storage device 82 and sends data supplied from the storage device 82 to the SPU 83.

The storage device 82 is formed of a non-volatile memory, which can store data even if the power supply is interrupted, such as a hard disk or a flash memory, and stores various items of data. The storage device 82 sends the data stored therein to the controller 81.

The SPU 83 codes the data supplied from the controller 81 according to a predetermined method and supplies the coded data to the modulator 84. If the data to be sent to the IC card 11 is supplied from the controller 81, the SPU 83 performs, for example, the Manchester coding, on the data and supplies the coded data to the modulator 84.

The SPU 83 also decodes the data supplied from the demodulator 87 according to a method corresponding to the coding method employed for the data, and supplies the decoded data to the controller 81. If data from the IC card 11 is sent from the demodulator 87, the SPU 83 performs, for example, the Manchester decoding, on the data and supplies the decoded data to the controller 81.

The modulator 84 generates modulated data by changing the phase, the amplitude, or the frequency of a carrier wave based on the data supplied from the SPU 83. For example, the modulator 84 performs ASK modulation on the data supplied from the SPU 83 by using a clock signal having a frequency of 13.56 MHz supplied from the oscillator circuit 85 as the carrier wave and transmits the generated modulation waves through the antenna 86 as radio waves.

The antenna 86 radiates the modulation waves supplied from the modulator 84 to the IC card 11 as radio waves by wireless communication.

The antenna 86 also receives modulation waves, for example, ASK modulation waves, from the IC card 11 by wireless communication, and supplies the received modulation waves to the demodulator 87.

The demodulator 87 demodulates the modulation waves supplied from the antenna 86 according to a demodulation method corresponding to the modulation method, for example, ASK modulation method, used by the modulator 40 (Fig. 2), and supplies the demodulated data to the SPU 83.

A reader/writer 101 (Fig. 5) of the service using terminal 13, which is discussed below, is configured similarly to the reader/writer 61, and an explanation thereof is thus omitted.

Fig. 5 is a block diagram illustrating the functional configuration of the service using terminal 13.

The service using terminal 13 includes the reader/writer 101, a folder manager 102, a message generator 103, a communication unit 104, a message analyzer 105, and a reporting unit 106.

When the IC card 11 (Fig. 1) is brought into close proximity with the reader/writer 101 by the user, the reader/writer 101 sends and receives data with the IC card 11 in a contactless manner by using radio waves. Among the information sent from the IC card 11, the reader/writer 101 supplies the report address to the message generator 103 and supplies category information to the folder manager 102.

The category information indicates the category of a service (for example, a launderette washing finishing report service, which is discussed below) used in the embodiment of the present invention. By this category information, the user can distinguish the services according to the category information even when he/she receives a plurality of services, thereby allowing the user to speedily obtain desired information.

As stated above, the reader/writer 101 is configured similarly to the reader/writer 61 (Fig. 4), and a detailed explanation thereof is thus omitted.

The folder manager 102 sets reception folder names for allocating service providing terminal messages, which are discussed below, according to the categories of the services on the basis of the category information supplied from the reader/writer 101. The folder manager 102 also allocates the service providing terminal messages reported from the reporting unit 106 according to the category information on the basis of the reception folder names.

The message generator 103 generates a service using terminal message based on the report address supplied from the reader/writer 101 and supplies the service using terminal message to the communication unit 104.

The service using terminal message is information including a report address that allows the corresponding service providing terminal message to be sent to the user owning the IC card 11, and details of the service using terminal message are given below.

The communication unit 104 sends the service using terminal message supplied from the message generator 103 to the domain management server 14 (Fig. 1). The communication unit 104 receives a service providing terminal message sent (transferred) from the domain management server 14 and supplies the received service providing terminal message to the message analyzer 105.

The message analyzer 105 analyzes the service providing terminal message supplied from the communication unit 104, and supplies the analyzed information to the reporting unit 106.

The reporting unit 106 reports the content of the service providing terminal message to the user on the basis of the analyzed information supplied from the message analyzer 105. If the reporting unit 106 is a liquid crystal display (LCD) or a cathode ray tube (CRT), the service providing terminal message is displayed on such a display unit (not shown).

Alternatively, the reporting unit 106 may be formed of a sound output unit (not shown) or a light emitting diode (LED) (not shown) to report the content of the service providing terminal message by sound or light, respectively.

Fig. 6 is a block diagram illustrating the functional configuration of the domain management server 14.

The domain management server 14 includes a communication unit 121, a message analyzer 122, a controller 123, and a table storage unit 124.

The communication unit 121 receives a service providing terminal message or a service using terminal message from the service providing terminal 12 (Fig. 1) or the service using terminal 13 (Fig. 1), respectively, and supplies the received message to the message analyzer 122.

The message analyzer 122 analyzes the service providing terminal message or the service using terminal message supplied from the communication unit 121, and supplies the analyzed information to the controller 123.

The controller 123 stores the report address and the email address (hereinafter referred to as the "real address") used in the service using terminal 13 in association with each other in a transfer table stored in the table storage unit 124 on the basis of the analyzed information supplied from the message analyzer 122.

The transfer table stores at least data for associating the report addresses with the real addresses of service using terminals, and details of the transfer table are discussed below.

If necessary, the controller 123 reads out the real address of the service using terminal 13, which is a transfer destination, from the transfer table stored in the table storage unit 124. The controller 123 allows the communication unit 121 to send the corresponding service providing terminal message on the basis of the real address obtained from the transfer table.

Fig. 7 is a block diagram illustrating the configuration of the domain management server 14.

A central processing unit (CPU) 151 executes various processing jobs according to programs stored in a ROM 152 or programs recorded in a storage device 158. In a RAM 153, programs and data executed by the CPU 151 are suitably stored. The CPU 151, the ROM 152, and the RAM 153 are connected to each other via a bus 154.

An input/output interface 155 is connected to the CPU 151 via the bus 154. An input unit 156, which includes a keyboard and a mouse, and an output unit 157, which includes a display, are connected to the input/output interface 155. The CPU 151 executes various processing jobs in response to an instruction input from the input unit 156, and outputs images or sound obtained as a result of the processing to the output unit 157.

The storage device 158 connected to the input/output interface 155 is formed of, for example, a hard disk, and stores programs and various data executed by the CPU 151.

The communication unit 159 communicates with external devices via a communication network, the Internet, or another network, or a communication medium. Programs may be obtained via the communication unit 159 and be stored in the storage device 158.

When a magnetic disk 171, an optical disc 172, a magneto-optical disk 173, or a semiconductor memory 174 is installed in a drive 160 connected to the input/output interface 155, the drive 160 drives the installed medium and obtains programs or data recorded in the medium. The obtained programs or data is transferred to and recorded in the storage device 158 if necessary.

The service providing terminal 12 (Fig. 1) and the service using terminal 13 (Fig. 1) may be configured similarly to the domain management server 14 shown in Fig. 7.

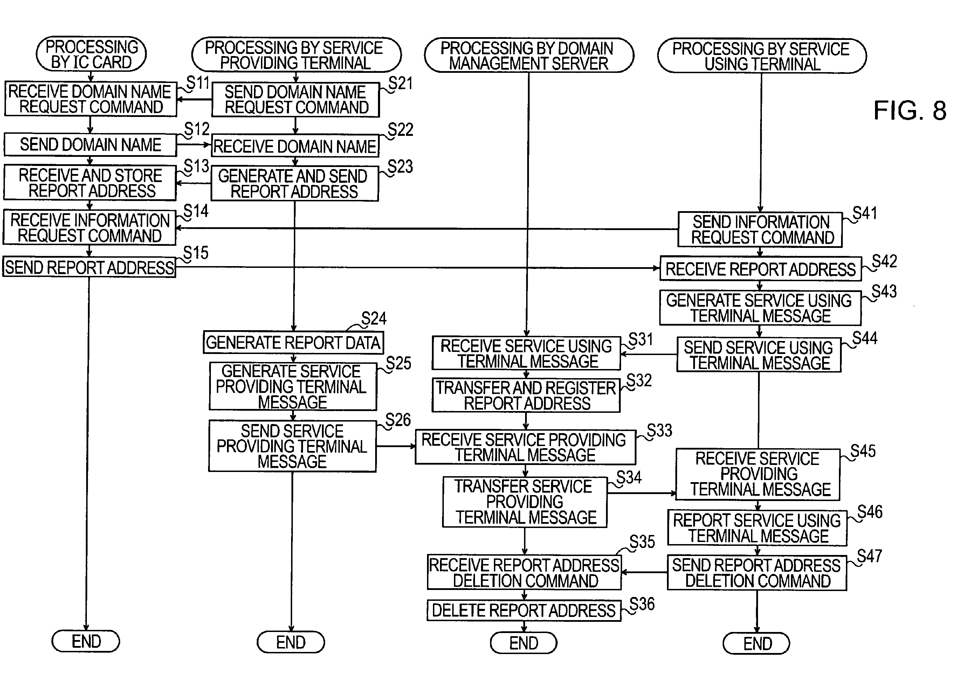

Fig. 8 is a flowchart illustrating the processing executed by the individual elements of the communication system 1 shown in Fig. 1. The processing executed by the communication system 1 is discussed below with reference to the flowchart in Fig. 8 in the context of a launderette washing finishing report service for reporting that washing at a self-service launderette where coin-operated automatic washing machines and tumbler dryers are installed is finished.

Reference is first given to the flowchart in Fig. 8 to discuss the overall processing performed by the communication system 1. Then, detailed processing jobs executed by the individual elements are discussed with reference to Figs. 9 through 18.

In step S21, the service providing terminal 12 sends a command for requesting the domain name (hereinafter referred to as the "domain name request command") stored in the IC card 11 to the IC card 11.

More specifically, when the user at a launderette brings the IC card 11 into close proximity with the service providing terminal 12 connected to (built in) a washing machine, the IC card 11 and the service providing terminal 12 enter a communicating state. In this state, in step S21, the domain name request command is sent to the IC card 11.

In step S11, the IC card 11 receives the domain name request command from the service providing terminal 12.

In step S12, the IC card 11 sends the domain name to the service providing terminal 12 in response to the domain name request command.

In step S22, the service providing terminal 12 receives the domain name from the IC card 11.

In step S23, the service providing terminal 12 generates a report address and sends it to the IC card 11.

In step S13, the IC card 11 receives the report address from the service providing terminal 12 and stores it therein.

As stated above, the storage of the report address in the IC card 11 allows the service providing terminal 12 to send predetermined information to the service using terminal 13 without recognizing the address of the service using terminal 13.

Then, after receiving the report address, the user returns to his/her home since it requires some time to finish washing. It is now assumed that the service using terminal 13 is installed at his/her home. The service to be provided to the user is to receive a message indicating that washing is finished.

In step S41, the service using terminal 13 sends a command for requesting information (hereinafter referred to as an "information request command") recorded in the IC card 11 to the IC card 11.

More specifically, when the user brings the IC card 11 into close proximity with the service using terminal 13 installed at home, the service using terminal 13 can communicate with the IC card 11 and thus sends the information request command to the IC card 11.

In step S14, the IC card 11 receives the information request command from the service using terminal 13.

In step S15, the IC card 11 sends the stored report address to the service using terminal 13 in response to the information request command.

In step S42, the service using terminal 13 receives the report address from the IC card 11.

In step S43, the service using terminal 13 generates a service using terminal message based on the received report address.

In step S44, the service using terminal 13 sends the generated service using terminal message to the domain management server 14.

In step S31, the domain management server 14 receives the service using terminal message from the service using terminal 13.

In step S32, the domain management server 14 transfers and registers the report address based on the received service using terminal message.

In step S24, the service providing terminal 12 generates report data.

More specifically, upon detecting that washing is finished, the service providing terminal 12 generates report data indicating that washing is finished. For example, the service providing terminal 12 monitors a change in the voltage of the washing machine and determines that washing is finished when the voltage becomes lower than a predetermined level, and at this point, the service providing terminal 12 generates report data.

Instead of monitoring a change in the voltage, the service providing terminal 12 may detect that washing is finished by other means, for example, by sound emitted from the washing machine. Alternatively, the washing machine may generate report data indicating that washing is finished.

In step S25, the service providing terminal 12 generates a service providing terminal message based on the generated report data.

More specifically, the service providing terminal 12 generates a service providing service message indicating that "washing is finished" on the basis of the report data.

In step S26, the service providing terminal 12 sends the generated service providing terminal message to the domain management server 14.

In step S33, the domain management server 14 receives the service providing terminal message from the service providing terminal 12.

More specifically, in step S33, the domain management server 14 receives the service providing terminal message indicating that "washing is finished" from the service providing terminal 12.

In step S34, the domain management server 14 transfers the service providing terminal message sent from the service providing terminal 12 to the service using terminal 13 on the basis of the transferred and registered report address.

In step S45, the service using terminal 13 receives the service providing terminal message from the domain management server 14.

In step S46, the service using terminal 13 reports the content of the service using terminal message based on the received service providing terminal message.

More specifically, the service using terminal 13 reports predetermined information to the user by displaying a message "washing is finished" on the screen of the service using terminal 13 on the basis of the received service providing terminal message.

This message allows the user to be aware at home that washing is finished and to fetch the washings at the launderette. In this manner, the user can make the best use of the time before finishing washing without the need to wait at the launderette.

In step S47, the service using terminal 13 sends a command for deleting the report address (hereinafter referred to as the "report address deletion command") stored in the domain management server 14 to the domain management server 14.

In step S35, the domain management server 14 receives the report address deletion command from the service using terminal 13.

In step S36, the domain management server 14 deletes the corresponding report address in response to the received report address deletion command and completes the processing.

As discussed above, by using the temporary report address, a leakage of personal information for identifying the user owning the IC card 11 and using the service provided by the service providing terminal 12 (service provider) can be prevented. Thus, the user can use the communication system 1 (services) with high security.

A detailed description is now given, with reference to Figs. 9 through 18, of the processing performed by the IC card 11, the service providing terminal 12, the service using terminal 13, and the domain management server 14 discussed with reference to the flowchart in Fig. 8.

The data sending/receiving processing performed by the IC card 11 is first described below with reference to the flowchart in Fig. 9.

In step S101, the controller 34 determines whether a domain name request command has been received from the service providing terminal 12 by monitoring the load condition of the antenna 31 that radiates radio waves having a predetermined frequency.

If it is determined in step S101 that a domain name request command has not been received, the process returns to step S101 and step S101 is repeated. That is, the IC card 11 remains in the standby state until a domain name request command is received after the IC card 11 is brought into close proximity with the reader/writer 61 of the service providing terminal 12 by the user.

If it is determined in step S101 that a domain name request command has been received, the process proceeds to step S102. In step S102, the controller 34 reads out the domain name from the storage unit 37 in response to the domain name request command sent from the service providing terminal 12 and sends the domain name to the service providing terminal 12.

The domain name is the name of a domain to which the service using terminal 13 belongs and is stored in the storage unit 37. Because of this domain name, the domain to which the service using terminal 13 belongs can be identified. In this case, by sending the domain name stored in the IC card 11 to the service providing terminal 12, the service providing terminal 12 can send a service providing terminal message to the corresponding domain. That is, the service providing terminal 12 can send a service providing terminal message to the domain management server 14 to which the service using terminal 13 belongs.

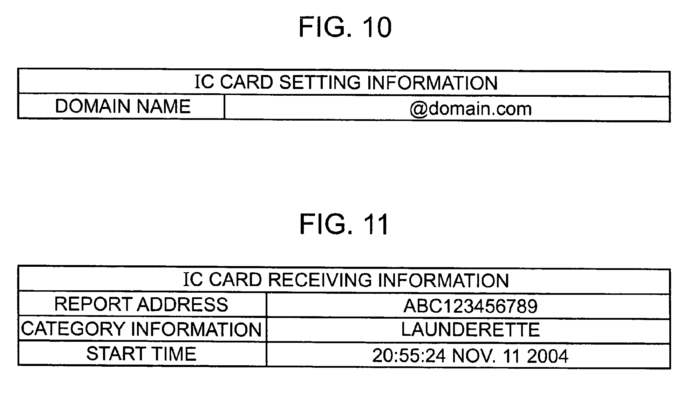

Fig. 10 illustrates an example of information set (stored) in the IC card 11 (such information is referred to as "IC card setting information").

In Fig. 10, the first row indicates the field and the second row indicates data set as the domain name. The first column indicates the field, and the second column indicates data corresponding to the field of the first column. That is, in the example shown in Fig. 10, the data set as the domain name is stored in the storage unit 37.

The data in the second row and in the second column in Fig. 10 indicates that the domain name stored in the storage unit 37 of the IC card 11 is @domain.com. That is, the domain to which the service using terminal 13 belongs is @domain.com.

The IC card setting information is set in advance before using a service, for example, the above-described launderette washing finishing message, by the user. More specifically, before using a service, the service provider sets the domain name, which is one of the IC card setting information, as @domain.com, which is the domain to which the service using terminal 13 belongs.

Referring back to the description of the flowchart in Fig. 9, in step S102, for example, the controller 34 reads out the domain name @domain.com from the storage unit 37 in response to the domain name request command sent from the service providing terminal 12 and supplies the read domain name to the SPU 33. The SPU 33 then codes the domain name and supplies the coded domain name to the modulator 40. The modulator 40 then modulates the coded domain name supplied from the SPU 33 and supplies the modulated domain name to the antenna 31. Then, modulation waves representing the modulated domain name are transmitted to the service providing terminal 12 as radio waves.

In step S103, the demodulator 32 receives information from the service providing terminal 12 via the antenna 31. The demodulator 32 then demodulates the received information and supplies the demodulated information to the SPU 33. The SPU 33 then decodes the information and supplies the decoded information to the controller 34.

Fig. 11 illustrates an example of the information received by the IC card 11.

In the example in Fig. 11, the first row indicates the field, the second row indicates data set as the report address, the third row indicates data set as the category information, and the fourth row indicates data set as the start time. The first column indicates the fields and the second column indicates data corresponding to the fields in the first column. That is, information concerning the report address, category information, and start time shown in Fig. 11 is sent from the service providing terminal 12 to the IC card 11.

In Fig. 11, the data in the second row and in the second column indicates that the report address received from the service providing terminal 12 is "ABC123456789". The data in the third row and in the second column indicates that the category information received from the service providing terminal 12 is "launderette". The data in the fourth row and in the second column indicates that the start time received from the service providing terminal 12 is "20:55:24 Nov. 11 2004".

That is, in the example in Fig. 11, the category information "launderette" and the start time "20:55:24 Nov. 11 2004" indicating that the user started washing at a launderette at 20:55:24 Nov. 11 2004, are sent, together with the report address, to the IC card 11.

Although in the example in Fig. 11 the information sent from the service providing terminal 12 includes the report address, category information, and start time, it is sufficient that only the report address is sent. Alternatively, another information may be included, such as a place where the service providing terminal 12 is installed.

Referring back to the description of the flowchart in Fig. 9, in step S103, for example, the demodulator 32 receives the report address "ABC123456789, the category information "launderette", and the start time "20:55:24 Nov. 11 2004" from the service providing terminal 12 via the antenna 31. The demodulator 32 then demodulates the received information and supplies the demodulated information to the SPU 33. The SPU 33 then decodes the information and supplies the decoded information to the controller 34.

In step S104, the controller 34 stores the information supplied from the SPU 33 in the report address storage unit 38. For example, in step S104, the controller 34 stores the report address "ABC123456789", the category information "launderette", and the start time "20:55:24 Nov. 11 2004" supplied from the SPU 33 in the report address storage unit 38.

In step S105, the controller 34 determines whether an information request command has been received from the service using terminal 13 by monitoring the load condition of the antenna 31 that radiates radio waves having a predetermined frequency.

If it is determined in step S105 that an information request command has not been received, the process returns to step S105 and step S105 is repeated. That is, the IC card 11 remains in the standby state until an information request command is received after the IC card 11 is brought into close proximity with the reader/writer 101 of the service using terminal 103 by the user.

If it is determined in step S105 that an information request command has been received, the process proceeds to step S106. In step S106, the controller 34 reads out the information from the report address storage unit 38 in response to the information request command sent from the service using terminal 13 and sends the read information to the service using terminal 13.

In step S106, for example, the controller 34 reads out the report address "ABC123456789", the category information "launderette", and the start time "20:55:24 Nov. 11 2004", from the report address storage unit 38, and supplies the read information to the SPU 33. The SPU 33 codes the information supplied from the controller 34 according to the Manchester coding and supplies the coded information to the modulator 40. The modulator 40 then performs ASK modulation on the coded information supplied from the SPU 33 and sends the modulated information to the reader/writer 101 of the service using terminal 13 via the antenna 31.

In step S107, the controller 34 deletes the information stored in the report address storage unit 38 and completes the processing. For example, in step S107, the controller 34 deletes the report address "ABC123456789", the category information "launderette", and the start time "20:55:24 Nov. 11 2004" stored in the report address storage unit 38.

As discussed above, by storing the report address sent from the service providing terminal 12, the IC card 11 allows the service using terminal 13 to receive a service providing terminal message sent from the service providing terminal 12 without disclosing personal information, such as a user's email address, to the service provider.

The IC card 11 deletes the report address which is once used after sending it to the service using terminal 13. As a result, the user can use the communication system 1 (services) with high security without worrying about a leakage of personal information, such as the user's email address, or receiving unsolicited mail (spam mail) at the user's email address.

The data sending/receiving processing performed by the service providing terminal 12 is described below with reference to the flowchart in Fig. 12.

In step S121, the reader/writer 61 determines whether it is possible to communicate with the IC card 11 by monitoring the load condition of the antenna 86 that radiates radio waves having a predetermined frequency.

If it is determined in step S121 that it is not possible to communicate with the IC card 11, the process returns to step S121 and step S121 is repeated. That is, the service providing terminal 12 remains in the standby state until it becomes possible to communicate with the IC card 11.

If it is determined in step S121 that it is possible to communicate with the IC card 11, the process proceeds to step S122 in which the reader/writer 61 generates a domain name request command and sends it to the IC card 11.

For example, in step S122, the controller 81 of the reader/writer 61 generates a domain name request command and supplies it to the SPU 83. The SPU 83 then codes the domain name request command supplied from the controller 81 and supplies the coded domain name request command to the modulator 84. The modulator 84 then modulates the domain name request command supplied from the SPU 83 and supplies the modulated command to the antenna 86. As a result, modulation waves representing the modulated domain name request command are transmitted to the IC card 11 as radio waves.

In step S123, the reader/writer 61 receives a domain name from the IC card 11 and supplies it to the message generator 63.

For example, in step S123, the demodulator 87 of the reader/writer 61 receives a domain name "@domain.com" from the IC card 11 via the antenna 86. The demodulator 87 then demodulates the received domain name and supplies it to the SPU 83. The SPU 83 then decodes the domain name supplied from the demodulator 87 and supplies the decoded domain name to the controller 81.

In step S123, the reader/writer 61 also supplies a request to generate a report address to the address generator 62.

In step S124, the address generator 62 generates random numbers in response to the request from the reader/writer 61. The address generator 62 generates random numbers "123456789" by, for example, Maximum Length Code (M-length sequences).

The M-length sequences are random numbers in which 0s and 1s are randomly arranged and are widely used since they satisfy the characteristics of ideal random numbers. The M-length sequences can be generated by using, for example, a shift register and an exclusive OR (EXOR) gate.

Other types of random numbers may be generated, such as the Gold sequences, binominal random numbers, Poisson random numbers, or normal random numbers.

In step S125, the address generator 62 generates a report address from the generated random numbers and the predetermined service ID for specifying the service providing terminal 12, and supplies the generated report address to the reader/writer 61.

For example, in step S125, the address generator 62 generates the value "ABC123456789" synthesized from a numeric string "123456789" generated from the random numbers and the service ID "ABC" as the report address, and supplies the generated report address to the reader/writer 61.

In step S126, the reader/writer 61 sends the report address supplied from the address generator 62 to the IC card 11 as information.

As stated above, Fig. 11 illustrates an example of the information received by the IC card 11, in other words, the information sent from the service providing terminal 12 to the IC card 11. In the example in Fig. 11, the information to be sent to the IC card 11 includes, not only the report address, but also category information and start time.

For example, in step S126, the reader/writer 61 sends the category information "launderette" recorded in the storage device 82 and the start time "20:55:24 Nov. 11 2004" counted by a timer (not shown), together with the report address "ABC123456789" supplied from the address generator 62, to the IC card 11.

In step S126, the reader/writer 61 also supplies the report address, the category information, and the start time to the message generator 63. For example, the reader/writer 61 supplies the report address "ABC123456789", the category information "launderette", and the start time "20:55:24 Nov. 11 2004" to the message generator 63.

In step S127, the data generator 64 determines whether report data is to be generated. For example, in step S127, if the service providing terminal 12 is connected to a washing machine (not shown) installed at a launderette, the data generator 64 determines whether report data is to be generated by monitoring the completion of washing.

If it is determined in step S127 that report data is not generated, the process returns to step S127 and step S127 is repeated. That is, the service providing terminal 12 remains in the standby state until the data generator 64 generates report data.

If it is determined in step S127 that report data is to be generated, the process proceeds to step S128 in which the data generator 64 supplies the generated report data to the message generator 63. The message generator 63 generates a service providing terminal message based on the report data supplied from the data generator 64 and the domain name, report address, category information, and start time supplied from the reader/writer 61, and then supplies the generated service providing terminal message to the communication unit 65.

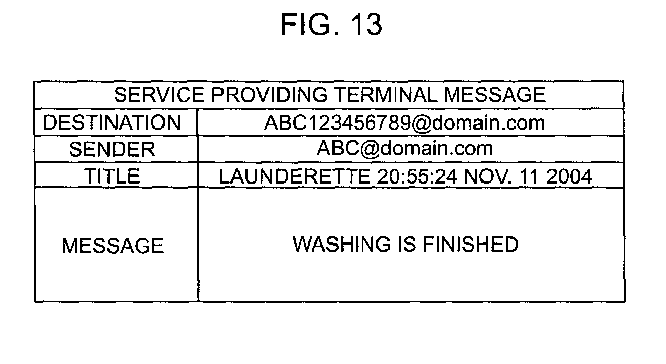

Fig. 13 illustrates an example of the service providing terminal message.

In the example in Fig. 13, the first row indicates the filed, the second row indicates the destination address, the third row indicates the sender address, the fourth row indicates the title, and the fifth row indicates a message representing the content of the data. The first column indicates the fields and the second column indicates the data corresponding to the fields of the first column. That is, in the example in Fig. 13, the service providing terminal message is a digital document (email) consisting of the title and the message content and sent from the address of the sender (service providing terminal 12) to the address of the destination.

In Fig. 13, the data in the second row and in the second column indicates that the destination address is "ABC123456789@domain.com". The data in the third row and in the second column indicates that the sender address is "ABC@domain.com". That is, the service providing terminal message is sent from the sender (service providing terminal 12), which is "ABC@domain.com", to the destination, which is "ABC123456789@domain.com", i.e., a temporary email address generated from the domain name and the report address.

The data in the fourth row and in the second column indicates that the title of the service providing terminal message is "launderette 20:55:24 Nov. 11 2004". The data in the fifth row and in the second column indicates that the content of the service providing terminal message is "washing is finished".

Referring back to the description of the flowchart in Fig. 12, in step S128, for example, the message generator 63 generates the service providing terminal message shown in Fig. 13 based on the report data "washing is finished" supplied from the data generator 64, the domain name "@domain.com", the report address "ABC123456789", the category information "launderette", and the start time "20:55:24 Nov. 11 2004" supplied from the reader/writer 61, and supplies the generated service providing terminal message to the communication unit 65.

In step S129, the communication unit 65 sends the service providing terminal message supplied from the message generator 63 to the domain management server 14.

As discussed above, the service providing terminal 12 generates a temporary report address and stores it in the IC card 11. The service providing terminal 12 also generates a service providing terminal message based on the report address and sends it to the domain management server 14. This allows the service using terminal 13 to receive the report data (service providing terminal message). As a result, the user can use the communication system 1 (services) with high security without worrying about a leakage of personal information, such as the user's email address, or receiving unsolicited mail (spam mail) at the user's email address.

The data sending/receiving processing performed by the domain management server 14 is now described below with reference to the flowchart in Fig. 14.

In step S141, the communication unit 121 determines whether a service using terminal message has been received from the service using terminal 13.

If it is determined in step S141 that a service using terminal message has not been received, the process returns to step S141 and step S141 is repeated. That is, the domain management server 14 remains in the standby state until a service using terminal message is received from the service using terminal 13.

If it is determined in step S141 that a service using terminal message has been received, the process proceeds to step S142 in which the message analyzer 122 analyzes the service using terminal message supplied from the communication unit 121. The message analyzer 122 then supplies the analyzed information to the controller 123.

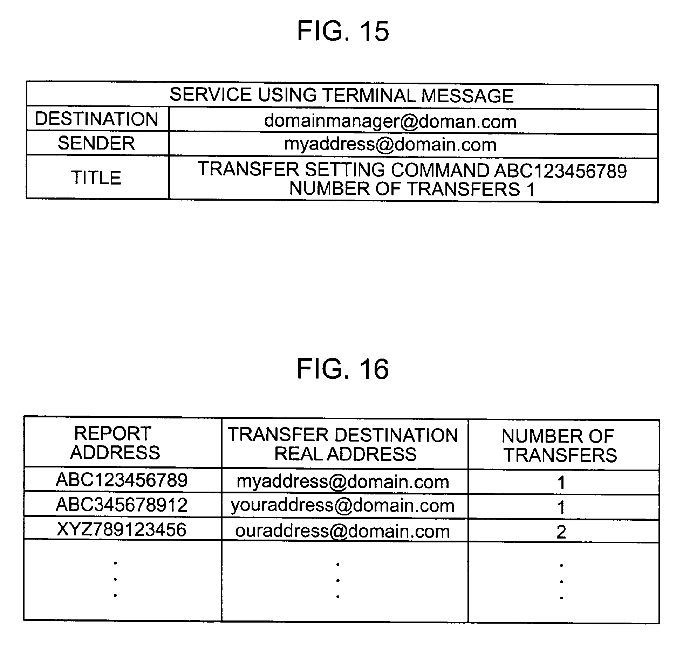

Fig. 15 illustrates an example of the service using terminal message.

In the example in Fig. 15, the first row indicates the field, the second row indicates the destination address, the third row indicates the sender address, and the fourth row indicates the title. The first column indicates the fields and the second column indicates the data corresponding to the fields in the first column. That is, in Fig. 15, the service using terminal message is a digital document (email) consisting of the title and sent from the address of the sender to the address of the destination.

The data in the second row and in the second column indicates that the destination address is domainmanager@domain.com. The data in the third row and in the second column indicates that the sender address is myaddress@domain.com. That is, the service using terminal message is sent from the sender (service using terminal 13), which is myaddress@domain.com, to the destination (domain management server 14), which is domainmanager@domain.com. In this case, myaddress@domain.com is the real address of the service using terminal 13.

The data in the fourth row and in the second column indicates that the title of the service using terminal message is "transfer setting command ABC123456789 number of transfers 1".

Referring back to the description of the flowchart in Fig. 14, in step S142, for example, the message analyzer 122 analyzes the service using terminal message supplied from the communication unit 121 to interpret from the title "transfer setting command ABC123456789 number of transfers 1" that the corresponding information is to be transferred to the report address "ABC123456789" once. The message analyzer 122 then supplies the analyzed information to the controller 123.

In step S143, on the basis of the analyzed information supplied from the message analyzer 122, the controller 123 stores the report address and the real address of the service using terminal 13 (i.e., the sender address of the service using terminal message) in association with each other in the transfer table stored in the table storage unit 124.

Fig. 16 illustrates an example of the transfer table.

In the example in Fig. 16, the first row indicates the fields, and the second row and the subsequent rows indicate the data of the service using terminal 13. The first column indicates the report address, the second column indicates the destination real address, and the third column indicates the number of transfers. That is, in the transfer table, the real address of the service using terminal 13, which is the destination, and the number of transfers defining the number by which the corresponding information is to be transferred to the service using terminal 13 are stored in association with the report address for specifying the user owning the IC card 11.

In the example in Fig. 16, the destination real address "myaddress@domain.com" and the number of transfers "1" are stored in association with the report address "ABC123456789". Additionally, the destination real address "youraddress@domain.com" and the number of transfers "1" are stored in association with the report address "ABC345678912", and the destination real address "ouraddress@domain.com" and the number of transfers "2" are stored in association with the report address "XYZ789123456".

In this manner, by storing the report address and the real address of the service using terminal 13 in association with each other, a service providing terminal message sent from the service providing terminal 12 can be transferred to the service using terminal 13.

It is sufficient that the information stored in the transfer table includes at least the report address and the real address of the service using terminal 13 in association with each other, and the number of transfers is not essential. However, by storing the number of transfers, a service providing terminal message can be transferred a plurality of times so that more detailed services can be provided. For example, in the launderette washing finishing report service, if the user does both washing and drying, a washing finishing report is given when washing is finished, and then, a drying finishing report is given when drying is finished by setting the number of transfers to be two, thereby making it possible to report more detailed information to the user.

Referring back to the description of the flowchart in Fig. 14, in step S143, for example, on the basis of the analyzed information (for example, a transfer setting command) supplied from the message analyzer 122, the controller 123 stores the report address "ABC123456789", the real address of the service using terminal 13 "myaddress@domain.com", and the number of transfers "1" in association with each other in the transfer table stored in the table storage unit 124. In this case, "ABC123456789", "myaddress@domain.com", and "1" in the first row in the transfer table shown in Fig. 16 are stored.

In step S144, the communication unit 121 determines whether a service providing terminal message has been received from the service providing terminal 12.

If it is determined in step S144 that a service providing terminal message has not been received, the process returns to step S144 and step S144 is repeated. That is, the domain management server 14 remains in the standby state until a service providing terminal message is received from the service providing terminal 12.

If it is determined in step S144 that a service providing terminal message has been received, the process proceeds to step S145 in which the message analyzer 122 analyzes the service providing terminal message supplied from the communication unit 121. The message analyzer 122 then supplies the analyzed information to the controller 123.

In this case, the service providing terminal message is the same as that shown in Fig. 13.

Accordingly, in step S145, for example, the message analyzer 122 analyzes the service providing terminal message shown in Fig. 13 sent from the service providing terminal 12 and supplied from the communication unit 121 to interpret from the destination "ABC123456789@domain.com" that the service providing terminal message is to be transferred to the report address "ABC123456789". The message analyzer 122 then supplies the analyzed information to the controller 123.

In step S146, the controller 123 obtains the real address of the service using terminal 13, which is the destination, from the transfer table stored in the table storage unit 124 on the basis of the analyzed information supplied from the message analyzer 122. For example, on the basis of the analyzed information indicating that the service providing terminal message is to be transferred to the report address "ABC123456789" supplied from the message analyzer 122, the controller 123 obtains the real address of the service using terminal 13, "myaddress@domain.com", associated with "ABC123456789" from the transfer table shown in Fig. 16 stored in the table storage unit 124.

In step S147, the controller 123 causes the communication unit 121 to send the service providing terminal message to the real address of the service using terminal 13 on the basis of the real address of the service using terminal 13, which is the destination, obtained from the transfer table. For example, in step S147, the controller 123 causes the communication unit 121 to send the service providing terminal message shown in Fig. 13 to the real address of the service using terminal 13 "myaddress@domain.com" on the basis of the real address of the service using terminal 13 "myaddress@domain.com" obtained from the transfer table shown in Fig. 16.

That is, the service providing terminal message sent from the service providing terminal 12 is transferred to the service using terminal 13 via the domain management server 14.

In step S148, the communication unit 121 determines whether a report address deletion command has been received from the service using terminal 13.

If it is determined in step S148 that a report address deletion command has not been received, the process returns to step S148 and step S148 is repeated. That is, the domain management server 14 remains in the standby state until a report address deletion command is received from the service using terminal 13.

If it is determined in step S148 that a report address deletion command has been received, the process proceeds to step S149 in which the controller 123 decrements the number of transfers for the corresponding real address stored in the transfer table in the table storage unit 124 by one. For example, in step S149, the controller 123 decrements the number of transfers for the report address "ABC123456789" stored in the transfer table in the table storage unit 124 by one and stores "0" in the transfer table.

In step S150, the controller 123 determines whether the number of transfers for the corresponding report address stored in the transfer table becomes 0 as a result of decrementing the number of transfers.

If the number of transfers is found to be 0 in step S150, the process proceeds to step S151 in which the corresponding report address is deleted from the transfer table. For example, in step S151, if the number of transfers for the report address "ABC123456789" is 0 in step S150, the controller 123 deletes the report address "ABC123456789", the destination real address "myaddress@domain.com", and the number of transfers "1" from the transfer table, and completes the processing.

As discussed above, by deleting data which has been transferred a predetermined number of times, the domain management server 14 can no longer send the service providing terminal message to the service using terminal 13. Thus, the service using terminal 13 does not receive unsolicited service providing terminal messages, and the number of records in the transfer table is not increased.

If it is determined in step S150 that the number of transfers is not 0, the report address is not deleted since it is still necessary for transferring the service providing terminal message. Then, processing is completed by skipping step S151.

As discussed above, the domain management server 14 can transfer the service providing terminal message sent from the service providing terminal 12 to the service using terminal 13. In this case, the domain management server 14 transfers the service providing terminal message based on the temporary report address of the service using terminal 13, thereby eliminating the need for the user to disclose his/her email address. As a result, the user can use the services with high security without worrying about a leakage of personal information.

The data sending/receiving processing performed by the service using terminal 13 is discussed below with reference to the flowchart in Fig. 17.

In step S161, the reader/writer 101 determines whether it is possible to communicate with the IC card 11 by monitoring the load condition of the antenna 86 that radiates radio waves having a predetermined frequency.

If it is determined in step S161 that it is not possible to communicate with the IC card 11, the process returns to step S161 and step S161 is repeated. That is, the service using terminal 13 remains in the standby state until it becomes possible to communicate with the IC card 11.

If it is determined in step S161 that it is possible to communicate with the IC card 11, the process proceeds to step S162. In step S162, the reader/writer 101 generates an information request command and sends it to the IC card 11.

For example, in step S162, the controller 81 of the reader/writer 101 generates an information request command and supplies it to the SPU 83. The SPU 83 then codes the information request command supplied from the controller 81, and supplies the coded command to the modulator 84. The modulator 84 then modulates the information request command supplied from the SPU 83 and supplies it to the antenna 86. As a result, modulation waves representing the modulated information request command can be transmitted to the IC card 11 as radio waves.

In step S163, the reader/writer 101 receives information from the IC card 11 in response to the information request command. For example, in step S163, the reader/writer 101 receives the report address "ABC123456789", the category information "launderette", and the start time "20:55:24 Nov. 11 2004" sent from the IC card 11 in response to the information request command.

More specifically, the demodulator 87 of the reader/writer 101 receives the report address "ABC123456789", the category information "launderette", and the start time "20:55:24 Nov. 11 2004" from the IC card 11 via the antenna 86. The demodulator 87 then demodulates the received information and supplies the demodulated information to the SPU 83. The SPU 83 then decodes the information supplied from the demodulator 87 and supplies the decoded information to the controller 81.

In step S163, among the received information, the reader/writer 101 supplies the report address to the message generator 103 and the category information and the start time to the folder manager 102.

In step S164, based on the category information supplied from the reader/writer 101, the folder manager 102 sets the category information as the reception folder name. For example, in step S164, based on the category information supplied from the reader/writer 101, the folder manager 102 sets the category information "launderette" as the reception folder name.

By setting the reception folder in advance, service providing terminal messages sent from the domain management server 14 can be allocated according to the predetermined categories, thereby enabling the user to speedily obtain predetermined information.

Although in this example the category information is set as the reception folder name, the user may set another item of information as the reception folder name. The folder manager 102 may be provided with a function of converting a code representing the category information into an actual name to set the reception folder name. In this case, the folder manager 102 allocates the service providing terminal messages into the reception folders based on the codes of the category information.

In step S165, the message generator 103 generates a service using terminal message based on the report address supplied from the reader/writer 101, and supplies the generated service using terminal message to the communication unit 104.

In this case, the service using terminal message is the same as that shown in Fig. 15.

In step S165, for example, the message generator 103 generates the service using terminal message shown in Fig. 15 based on the report address "ABC123456789" supplied from the reader/writer 101 and the address of a server that manages the predetermined domain and transfer information stored in a storage unit (not shown), and supplies the generated service using terminal message to the communication unit 104.

The address of a server that manages the domain is, for example, the address of the domain management server 14 "domainmanager@domain.com", and the transfer information includes a command for causing the domain management server 14 to transfer the corresponding message and the number of transfers. Those items of data are initially set by the user before starting the communication system 1 (services) or are set in advance when the communication system 1 is shipped.

In step S166, the communication unit 104 sends the service using terminal message supplied from the message generator 103 to the domain management server 14. For example, in step S166, the communication unit 104 sends the service using terminal message shown in Fig. 15 to the domain management server 14.

In step S167, the communication unit 104 determines whether a service providing terminal message has been received from the domain management server 14.

If it is determined in step S167 that a service providing terminal message has not been received, the process returns to step S167 and step S167 is repeated. That is, the service using terminal 13 remains in the standby state until a service providing terminal message is received from the domain management server 14.

If it is determined in step S167 that a service providing terminal message has been received, the process proceeds to step S168 in which the message analyzer 105 analyzes the service providing terminal message supplied from the communication unit 104. The message analyzer 105 then supplies the analyzed information to the reporting unit 106.

In this case, the service providing terminal message is the same as that shown in Fig. 13.

Accordingly, for example, in step S168, the message analyzer 105 analyzes the title "launderette 20:55:24 Nov. 11 2004" and the message "washing is finished" based on the service providing terminal message shown in Fig. 13 sent from the domain management server 14, and supplies the analyzed information to the reporting unit 106.

In step S169, the reporting unit 106 reports the service providing terminal message based on the analyzed information supplied from the message analyzer 105. For example, in step S169, if the reporting unit 106 is a display device, such as an LCD or a CRT, it displays the service providing terminal message on the screen (not shown) of the display device.

In this case, the reporting unit 106 allocates the service providing terminal message supplied from the message analyzer 105 according to the category information under the control of the folder manager 102. For example, on the basis of the category information supplied from the message analyzer 105, the reporting unit 106 allocates the service providing terminal message into the reception folder of the category "launderette" set in step S164.

The folder manager 102 also checks whether the start time supplied from the reader/writer 101 coincides with the start time indicated in the title of the service providing terminal message and sends a message to instruct the user to check that the service providing terminal message corresponds to the service requested by the user. Since the start time "20:55:24 Nov. 11 2004" supplied from the reader/writer 101 coincides with the start time "20:55:24 Nov. 11 2004" indicated in the title of the service providing terminal message, a message indicating that the service providing terminal message corresponds to the service requested by the user is displayed on the screen of the display device. If the two start times do not match each other, a message indicating that the service providing terminal message does not correspond to the service requested by the user is displayed on the screen of the display device.

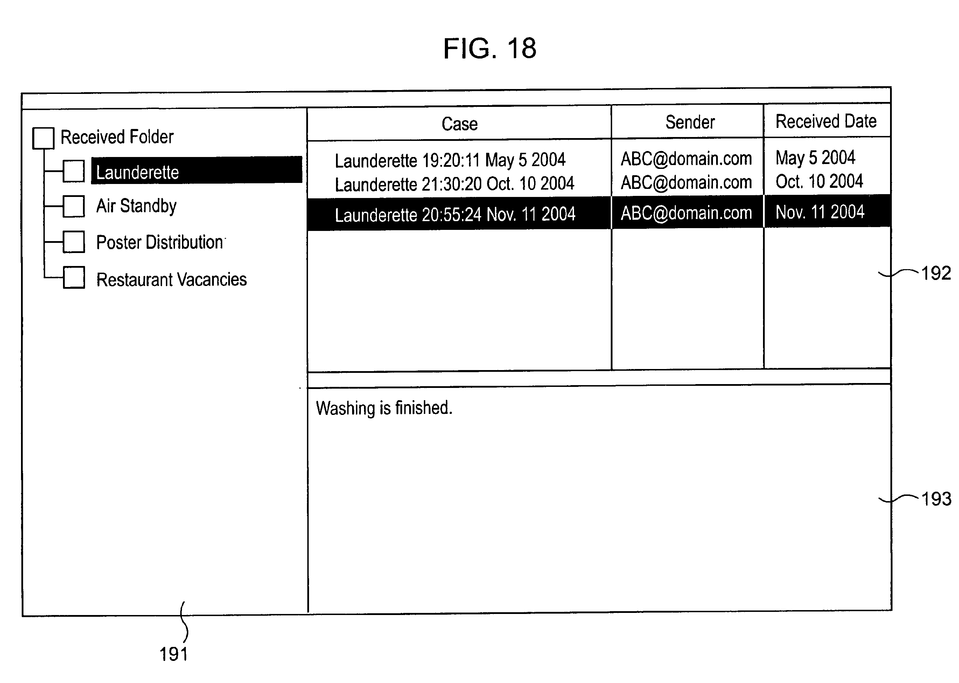

Fig. 18 illustrates an example of the screen of the reporting unit 106 that displays service providing terminal messages.

The screen of the reporting unit 106 includes a tree view window 191, a list window 192, and a preview window 193.

In the tree view window 191, the category information is displayed in a tree view format. The category information includes "launderette", "air standby", "poster distribution", and "restaurant vacancies".

As stated above, the category information in the tree view window 191 is set by the folder manager 102. That is, the category information read from the IC card 11 by the reader/writer 101 of the service using terminal 103 is displayed in the tree view window 191.

In the list window 192, a list of service providing terminal messages sent from the domain management server 14 is displayed. For example, if the launderette in the tree view window 191 is selected, "launderette 19:20:11 May 5 2004", "ABC@domain.com", "May 5 2004", etc., "launderette 21:30:20 Oct. 10 2004", "ABC@domain.com", "Oct. 10 2004", etc., and "launderette 20:55:24 Nov. 11 2004", "ABC@domain.com", "Nov. 11 2004", etc. are displayed in the list window 192.

As stated above, the list of service providing terminal messages displayed in the list window 192 is allocated according to the category information, for example, "launderette".

In this manner, in the list window 192, the category information and start time are displayed as the title of a service providing terminal message. This reminds the user of the service which is being used by the user, in this case, the launderette washing finishing report service, and the user can also distinguish the service providing terminal messages from unsolicited mail.

In the preview window 193, the content of a service providing terminal message clicked by the user from the list, for example, "washing is finished", is displayed.

In this manner, service providing terminal messages are displayed according to the category information, thereby enabling the user to speedily check the content of the service providing terminal messages.

Referring back to the description of the flowchart in Fig. 17, in step S170, the communication unit 104 sends a report address deletion command to the domain management server 14, and completes the processing.

As discussed above, by generating a service using terminal message based on the report address received from the IC card 11 and by sending the generated message to the domain management server 14, the service using terminal 13 can receive a service providing terminal message from the service providing terminal 12. As a result, the user can use the services without the need to disclose personal information, such as his/her email address, to the service provider.

In the above-described example, the user owns the IC card 11 and brings it into close proximity with the service providing terminal 12 and the service using terminal 13, thereby allowing the service using terminal 13 to receive a service providing terminal message. Alternatively, in an embodiment of the present invention, the user may bring a portable terminal (for example, a cellular telephone) provided with functions of the IC card 11 into close proximity with the service providing terminal 12, thereby allowing the portable terminal to receive a service providing terminal message.

The processing for receiving a service providing terminal message by a cellular telephone is described below with reference to Figs. 19 through 22.

Fig. 19 is a block diagram illustrating an example of a communication system 201 according to an embodiment of the present invention. In Fig. 19, elements similar to those shown in Fig. 1 are designated with like reference numerals, and an explanation thereof is thus omitted.

The communication system 201 includes the service providing terminal 12, the domain management server 14, and a portable terminal 211. Data is sent and received between the service providing terminal 12 and the portable terminal 211 in a contactless manner by using radio waves. Communication is performed between the service providing terminal 12 and the domain management server 14 via a network (not shown) by wired or wireless means. Communication is performed between the domain management server 14 and the portable terminal 211 by wired or wireless means via a base station (not shown) of cellular telephones, a public switched network (not shown), a gateway (not shown), or the Internet (not shown).

Fig. 20 is a block diagram illustrating the functional configuration of the portable terminal 211.

The portable terminal 211 is an electronic device having a built-in contactless IC card, for example, a cellular telephone, a personal handyphone system (PHS), or a PDA.

The portable terminal 211 includes an IC card 211, a folder manager 222, a message generator 223, a communication unit 224, a message analyzer 225, and a reporting unit 226.

The configuration and functions of the folder manager 222, the message generator 223, the communication unit 224, the message analyzer 225, and the reporting unit 226 are basically similar to those of the folder manager 102, the message generator 103, the communication unit 104, the message analyzer 105, and the reporting unit 106, respectively, forming the service using terminal 13 shown in Fig. 5, and an explanation thereof is thus omitted. In the portable terminal 211 in Fig. 20, the IC card 221 is disposed instead of the reader/writer 101 of the service using terminal 13 shown in Fig. 5. The functional configuration of the IC card 221 is basically similar to that of the IC card 11 shown in Fig. 2. That is, the portable terminal 211 is provided with functions serving as both the IC card 11 and the service using terminal 13.

When the user brings the portable terminal 211 into close proximity with the service providing terminal 12, the IC card 221 sends and receives data with the reader/writer 61 in a contactless manner by using radio waves. For example, the IC card 221 receives information from the reader/writer 61, and then sends the category information and start time to the folder manager 222 and the report address to the message generator 223.

As discussed above, by integrating the IC card 221 having functions similar to those of the IC card 11 into the easy-to-carry portable terminal 211, the user can receive various services by using the portable terminal 211 at any place when he/she is away.

The data sending/receiving processing performed by the portable terminal 211 is described below with reference to the flowchart in Fig. 21. The processing jobs performed by the service providing terminal 12 and the domain management server 14 are similar to those indicated by the flowcharts in Figs. 12 and 14, respectively, and a detailed explanation thereof is thus omitted.

In step S201, the IC card 221 determines whether a domain name request command has been received from the service providing terminal 12 by monitoring the load condition of the IC card 221 that radiates radio waves having a predetermined frequency.

If it is determined in step S201 that a domain name request command has not been received, the process returns to step S201 and step S201 is repeated. That is, the IC card 221 remains in the standby state until a domain name request command is received after the user brings the portable terminal 211 into close proximity with the reader/writer 61 of the service providing terminal 12.

If it is determined in step S201 that a domain name request command has been received, the process proceeds to step S202. In step S202, the IC card 221 reads out the stored domain name in response to the domain name request command sent from the service providing terminal 12 and sends the read domain name to the service providing terminal 12.

For example, in step S202, the IC card 221 reads out the domain name @domain.com in response to the domain name request command sent from the service providing terminal 12, and sends the read domain name to the service providing terminal 12.

In step S203, the IC card 221 receives information from the service providing terminal 12. For example, in step S203, the IC card 221 receives the report address "ABC123456789", the category information "launderette", and the start time "20:55:24 Nov. 11 2004" from the service providing terminal 12, and supplies the report address "ABC123456789" to the message generator 223 and the category information and start time to the folder manager 222.

In step S204, based on the category information supplied from the IC card 221, the folder manager 222 sets the category information as the reception folder name. For example, in step S204, based on the category information "launderette" supplied from the IC card 221, the folder manager 222 sets the category information "launderette" as the reception folder name.

In this manner, by setting reception folders, service providing terminal messages sent from the domain management server 14 can be allocated according to the predetermined categories, thereby allowing the user to speedily check predetermined information.

In step S205, the message generator 223 generates a service using terminal message based on the report address supplied from the IC card 221, and supplies the generated message to the communication unit 224.

If the service using terminal message shown in Fig. 15 is generated by the message generator 223, in step S205, the message generator 223 generates the service using terminal message based on the report address "ABC123456789" supplied from the IC card 221 and the address of a server that manages the predetermined domain and transfer information stored in a storage unit (not shown), and supplies the generated service using terminal message to the communication unit 224.

The address of a server that manages the domain is, for example, the address of the domain management server 14 "domainmanager@domain.com", and the transfer information includes a command for causing the domain management server 14 to transfer the corresponding message and the number of transfers. Those items of data are initially set by the user before starting the communication system 1 (services) or are set in advance when the communication system 1 is shipped.

In step S206, the communication unit 224 sends the service using terminal message supplied from the message generator 223 to the domain management server 14. For example, in step S206, the communication unit 224 sends the service using terminal message shown in Fig. 15 supplied from the message generator 223 to the domain management server 14.

In step S207, the communication unit 224 determines whether a service providing terminal message has been received from the domain management server 14.

If it is determined in step S207 that a service providing terminal message has not been received, the process returns to step S207 and step S207 is repeated. That is, the portable terminal 211 remains in the standby state until a service providing terminal message is received from the domain management server 14.

If it is determined in step S207 that a service providing terminal message has been received, the process proceeds to step S208 in which the message analyzer 225 analyzes the service providing terminal message supplied from the communication unit 224. The message analyzer 225 then supplies the analyzed information to the reporting unit 226.

In this case, if the service providing terminal message sent from the domain management server 14 is the same as that shown in Fig. 13, in step S208, the message analyzer 225 analyzes the title "launderette 20:55:24 Nov. 11 2004" and the message "washing is finished" based on the service providing terminal message shown in Fig. 13 sent from the domain management server 14, and supplies the analyzed information to the reporting unit 226.

In step S209, the reporting unit 226 reports the service providing terminal message based on the analyzed information supplied from the message analyzer 225. For example, in step S209, if the reporting unit 226 is a display device, such as an LCD or a CRT, it displays the service providing terminal message on the screen (not shown) of the display device.

In this case, the reporting unit 226 allocates the service providing terminal message supplied from the message analyzer 225 according to the category information under the control of the folder manager 222. For example, on the basis of the category information supplied from the message analyzer 225, the reporting unit 226 allocates the service providing terminal message into the reception folder of the category "launderette" set in step S204.

The folder manager 222 also checks whether the start time supplied from the IC card 221 coincides with the start time indicated in the title of the service providing terminal message and sends a message to instruct the user to check that the service providing terminal message corresponds to the service requested by the user. Since the start time "20:55:24 Nov. 11 2004" supplied from the IC card 221 coincides with the start time "20:55:24 Nov. 11 2004" indicated in the title of the service providing terminal message, a message indicating that the service providing terminal message corresponds to the service requested by the user is displayed on the screen of the display device. If the two start times do not match each other, a message indicating that the service providing terminal message does not correspond to the service requested by the user is displayed on the screen of the display device.

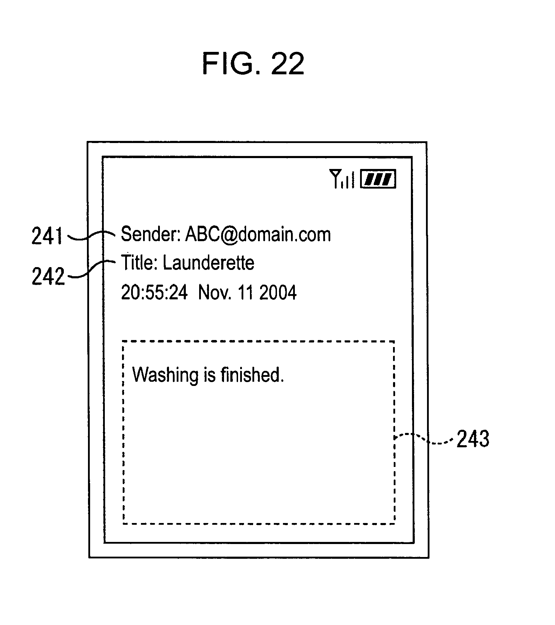

Fig. 22 illustrates an example of the screen of the reporting unit 226 that displays service providing terminal messages.

The screen of the reporting unit 226 includes a sender address 241, a title 242, and a message content 243.

The sender address 241 indicates the address of the sender of a service providing terminal message. For example, if the service providing terminal message shown in Fig. 13 is sent from the service providing terminal 12, the email address "ABC@domain.com" of the service providing terminal 12 is displayed in the sender address 241.

The title 242 indicates the title of a service providing terminal message. For example, if the service providing terminal message shown in Fig. 13 is sent from the service providing terminal 12, the title "launderette 20:55:24 Nov. 11 2004" is displayed in the title 242.

The message content 243 indicates the content of a service providing terminal message. For example, if the service providing terminal message shown in Fig. 13 is sent from the service providing terminal 12, the message content "washing is finished" is displayed in the message content 243.

In this manner, the user can receive service providing terminal messages by using the portable terminal 211 even if he/she is away, thereby allowing the user to speedily check the content of service providing terminal messages.

Referring back to the description of the flowchart in Fig. 21, in step S210, the communication unit 224 sends a report address deletion command to the domain management server 14 and completes the processing.

As described above, by generating a service using terminal message based on the report address received from the IC card 221 and by sending the generated message to the domain management server 14, the portable terminal 211 can receive a service providing terminal message from the service providing terminal 12. As a result, the user can use the services without the need to disclose personal information, such as his/her email address, to the service provider. Additionally, by carrying the portable terminal 211 when the user is away, he/she can check the content of service providing terminal messages and takes action in accordance with the content of the messages.

In the above-described example, the transfer table is managed by the domain management server 14. If each of the servers managed by a plurality of companies has a function, such as a transfer table, problems may occur.

Email is distributed by so-called mail servers of providers or cellular telephone carriers. For example, if the user uses email after contracting with a provider, the mail server is provided by the provider. In this case, an email address is uniquely assigned to each user, and the domain name of the email addresses is the same for all users, that is, the domain name unique to the provider, for example, domain.com.

Similarly, if the user uses email through a cellular telephone after contracting with a cellular telephone carrier, the mail server is provided by the cellular telephone carrier. In this case, an email address is uniquely assigned to each user, and the domain name of the email addresses is the same, that is, the domain name unique to the cellular telephone carrier, for example, domain2.com.

In short, the providers, cellular telephone carriers, companies, and educational institutions each have unique domain names, and the number of which is infinite. Accordingly, it is preferable that the functions of the domain management servers 14 that transfer service providing terminal messages (email) be centrally managed.

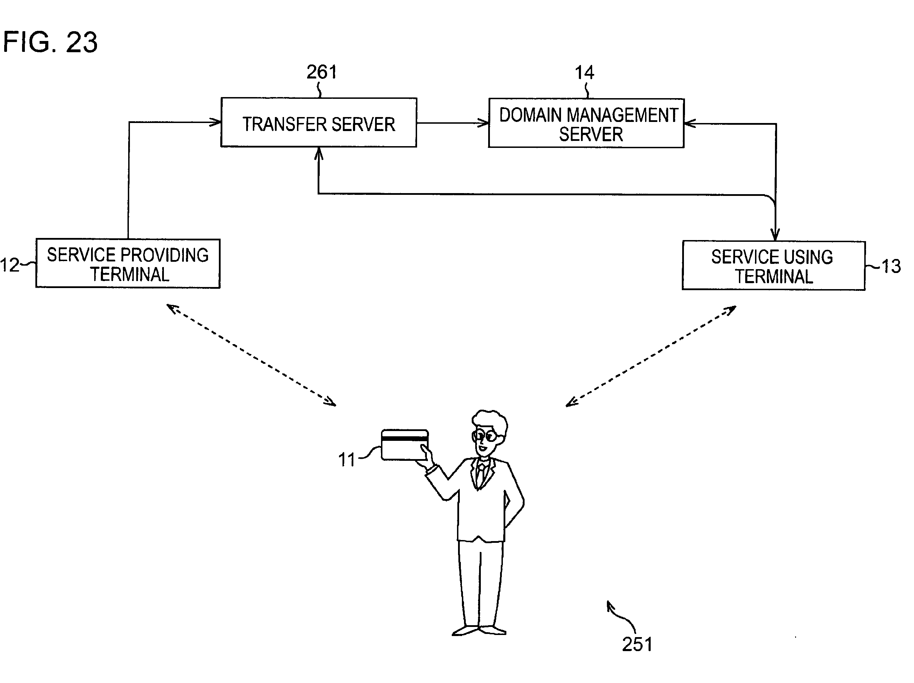

A description is now given, with reference to Figs. 23 through 27, of the transfer processing performed by a central server (transfer server 261, which is discussed below) integrating the functions for transferring service providing terminal messages when a plurality of domain management servers 14 are disposed.

Fig. 23 is a block diagram illustrating an example of a communication system 251 according to an embodiment of the present invention. In Fig. 23, elements similar to those shown in Fig. 1 are designated with like reference numerals, and an explanation thereof is thus omitted.

The communication system 251 includes the IC card 11, the service providing terminal 12, the service using terminal 13, the domain management server 14, and the transfer server 261. That is, the communication system 251 is equivalent to the communication system 1 shown in Fig. 1 provided with the transfer server 261.

Communication is performed between the service providing terminal 12 and the transfer server 261 by wired or wireless means via a network (not shown). The same applies to communication between the service using terminal 13 and the transfer server 261 and between the transfer server 261 and the domain management server 14.

In the communication system 251, among the functions of the communication system 1 shown in Fig. 1, the domain management server 14 has mail server functions, such as a function of distributing email sent by the user to destinations designated with the email addresses and a function of allocating email delivered to the mail server to a user's mail box.

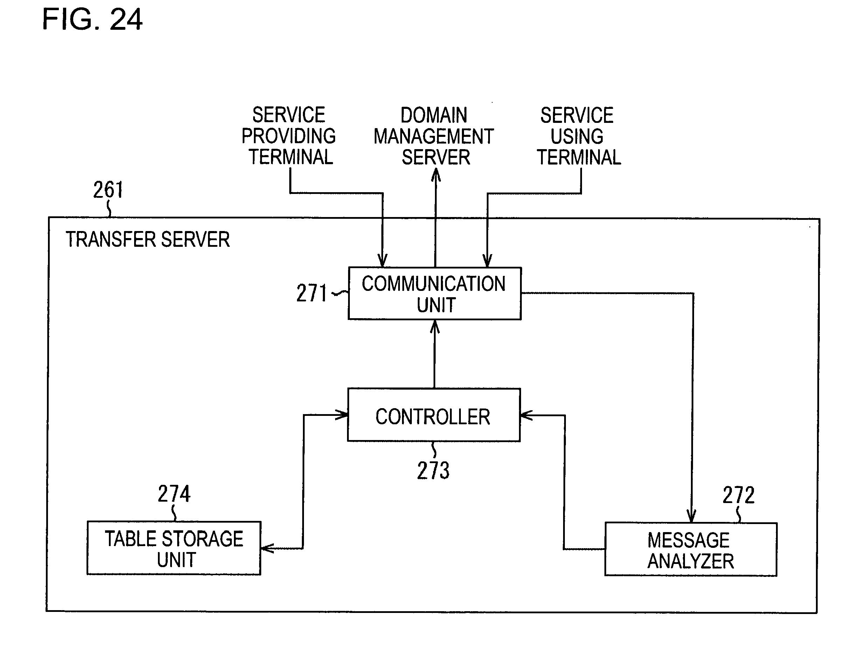

Fig. 24 is a block diagram illustrating the functional configuration of the transfer server 261.

The transfer server 261 includes a communication unit 271, a message analyzer 272, a controller 273, and a table storage unit 274.

The configuration and functions of the communication unit 271, the message analyzer 272, the controller 273, and the table storage unit 274 are basically similar to those of the communication unit 121, the message analyzer 122, the controller 123, and the table storage unit 124, respectively, of the domain management server 14 shown in Fig. 6, and an explanation thereof is thus omitted. That is, the configuration and functions of the transfer server 261 are basically similar to those of the domain management server 14, and the transfer server 261 transfers service providing terminal messages to one or a plurality of domain management servers 14.

The communication unit 271 receives a service providing terminal message or a service using terminal message from the service providing terminal 12 or the service using terminal 13, respectively, and supplies the received message to the message analyzer 272. The communication unit 271 also sends (transfers) a service providing terminal message to the domain management server 14 under the control of the controller 273.

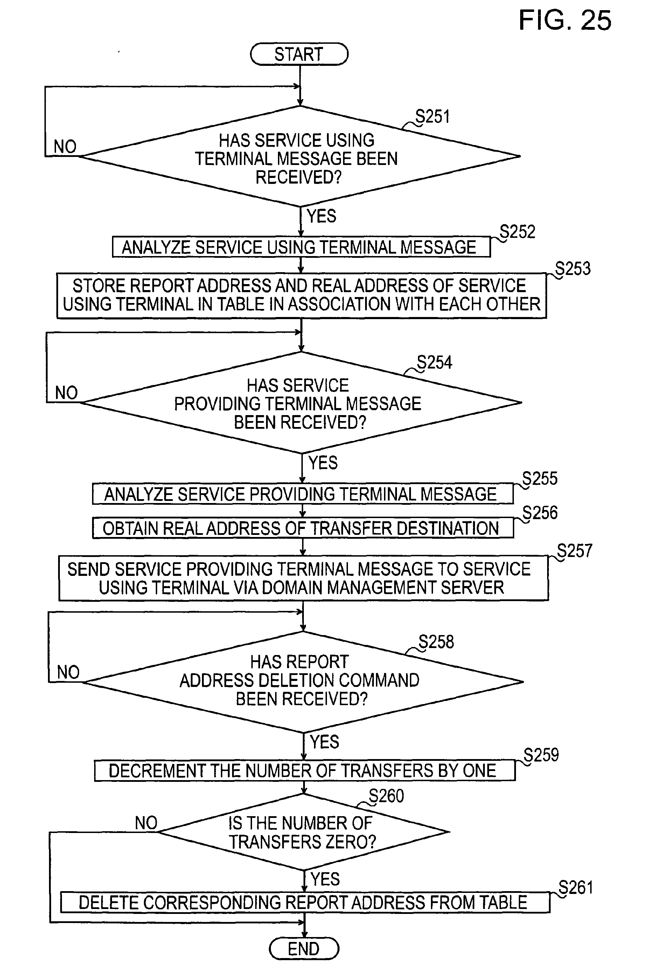

The data sending/receiving processing performed by the transfer server 261 is discussed below with reference to the flowchart in Fig. 25. The processing jobs performed by the IC card 11, the service providing terminal 12, the service using terminal 13, and the domain management server 14 are similar to those indicated by the flowcharts of Figs. 9, 12, 17, and 14, respectively, and an explanation thereof is thus omitted.

Steps S251 and S252 are similar to steps S141 and S142, respectively, in Fig. 14, and an explanation thereof is thus omitted.

In step S253, based on the analyzed information supplied from the message analyzer 272, the controller 273 stores the report address and the real address of the service using terminal 13 (i.e., the sender address of the service using terminal message) in association with each other in the transfer table stored in the table storage unit 274.

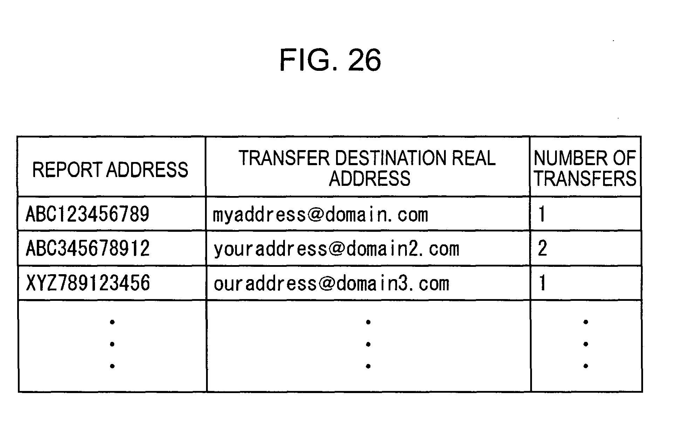

Fig. 26 illustrates an example of the transfer table.

In the transfer table shown in Fig. 26, the first row indicates the fields, and the second row and the subsequent rows indicate the data of the service using terminal 13. The first column represents the report address, the second column designates the transfer destination real address, and the third column represents the number of transfers. That is, the real address of the service using terminal 13, which is the transfer destination, and the number of transfers defining the number of times by which the corresponding message is transferred are stored in the transfer table in association with the report address specifying the user owing the IC card 11.

In the transfer table shown in Fig. 26, the transfer destination real address "myaddress@domain.com" and the number of transfers "1" are stored in association with the report address "ABC123456789". The transfer destination real address "youraddress@domain2.com" and the number of transfers "2" are stored in association with the report address "ABC345678912". The transfer destination real address "ouraddress@domain3.com" and the number of transfers "1" are stored in association with the report address "XYZ789123456".

The transfer destination real addresses stored in the transfer table in Fig. 26 differ from each other, such as "domain.com" (second row and second column), "domain2.com" (third row and second column), and "domain3.com" (fourth row and second column). This is because service using terminal messages are sent from the service using terminals 13 belonging to the domain management servers 14 having different domain names, as stated above.

In this manner, by storing the report addresses and the real addresses of the service using terminals 13 in association with each other, service providing terminal messages sent from the service providing terminal 12 can be transferred to the service using terminals 13 via the domain management servers 14.

Referring back to the description of the flowchart in Fig. 25, in step S253, on the basis of the analyzed information (for example, a transfer setting command) supplied from the message analyzer 272, the report address "ABC123456789", the transfer destination real address "myaddress@domain.com", and the number of transfers "1" are stored in association with each other in the transfer table stored in the table storage unit 274. In this case, "ABC123456789", "myaddress@domain.com", and "1" in the first row of the transfer table shown in Fig. 26 are stored.

Steps S254 through S256 are similar to steps S144 through S146, respectively, in Fig. 14, and an explanation thereof is thus omitted.

In step S257, on the basis of the real address of the service using terminal 13, which is the transfer destination, obtained from the transfer table, the controller 273 causes the communication unit 271 to send the service providing terminal message to the real address of the service using terminal 13 via the domain management server 14. For example, in step S257, on the basis of the real address of the service using terminal 13, which is the transfer destination "myaddress@domain.com, obtained from the transfer table in Fig. 26, the controller 273 causes the communication unit 271 to send the service providing terminal message shown in Fig. 13 to the real address of the service using terminal 13 via the domain management server 14.

That is, the service providing terminal message sent from the service providing terminal 12 is transferred to the service using terminal 13 via the transfer server 261 and the domain management server 14.

Steps S258 through S261 are similar to steps S148 through S151, respectively, in Fig. 14, and an explanation thereof is thus omitted.

As discussed above, the transfer server 261 can transfer service providing terminal messages sent from the service providing terminal 12 to the service using terminals 13 belonging to the corresponding domain management servers 14 via the domain management servers 14. Accordingly, even if a plurality of domain management servers 14 are provided, the single transfer server 261 can be disposed to construct the communication system 251. That is, only by disposing the transfer server 261, existing mail servers (for example, the domain management server 14 shown in Fig. 23) provided by, for example, providers or cellular telephone carriers, can be used as they are, and also, a system can be constructed inexpensively since only the single transfer server 261 is required. Additionally, since functions for transferring service providing terminal messages are integrated into the transfer server 261, handling and monitoring of the communication system 251 is easy, and in case of a failure, the cause of the failure can be specified speedily.

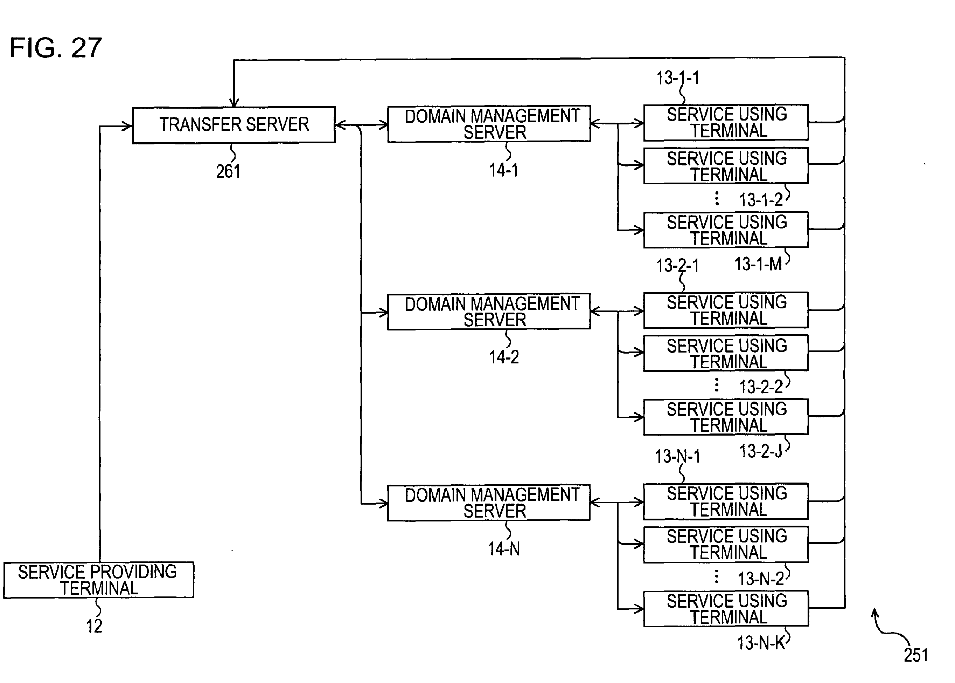

Fig. 27 illustrates an example of the configuration of the transfer server 261.

In Fig. 27, the communication system 251 includes the service providing terminal 12, service using terminals 13-1-1 through 13-1-M, service using terminals 13-2-1 through 13-2-J, service using terminals 13-N-1 through 13-N-K, domain management servers 14-1 through 14-N, and the transfer server 261.

The service using terminals 13-1-1 through 13-1-M, the service using terminals 13-2-1 through 13-2-J, and the service using terminals 13-N-1 through 13-N-K have functions similar to those of the above-described service using terminal 13.

The service using terminals 13-1-1 through 13-1-M are used by the corresponding users subscribing to a provider that provides the domain management server 14-1 (having a domain name "domain.com").

Similarly, the service using terminals 13-2-1 through 13-2-J and the service using terminals 13-N-1 through 13-N-K are used by the corresponding users subscribing to providers that provide the domain management server 14-2 (having a domain name "domain2.com") and the domain management server 14-N (having a domain name "domain3.com"), respectively.

When the user brings the IC card 11 into close proximity with one of the service using terminals 13-1-1 through 13-1-M, the service using terminals 13-2-1 through 13-2-J, and the service using terminals 13-N-1 through 13-N-K, the corresponding service using terminal generates a service using terminal message and sends it to the transfer server 261.

The transfer server 261 then receives the service using terminal message from the corresponding service using terminal and stores the report address and the real address of the service using terminal 13 contained in the received service using terminal message.

For example, the transfer server 261 stores the report address and the real address of the service using terminal 13 contained in the received service using terminal message in association with each other in the transfer table shown in Fig. 26. That is, in the transfer destination real address in the transfer table, a plurality of domain names, such as "domain.com", "domain2.com, and "domain3.com", are stored.

The service providing terminal 12 generates a service providing terminal message and sends it to the transfer server 261.

The transfer server 261 transfers the service providing terminal message supplied from the service providing terminal 12 to the corresponding one of the domain management servers 14-1 through 14-N according to the stored transfer table.

For example, on the basis of the report address contained in the service providing terminal message, the transfer server 261 reads out the transfer destination real address "myaddress@domain.com" associated with the report address stored in the transfer table, and transfers the service providing terminal message (having a domain name "domain.com") to the domain management server 14-1 according to the read address.

Similarly, the transfer server 261 transfers the service providing terminal message to the domain management server 14-2 (having a domain name "domain2.com") according to the transfer destination real address "youraddress@domain2.com" associated with the report address. Likewise, the transfer server 261 transfers the service providing terminal message to the domain management server 14-N (having a domain name "domain3.com") according to the transfer destination real address "ouraddress@domain3.com" associated with the report address.

Among the functions of the above-described domain management server 14, the domain management servers 14-1 through 14-N each have mail server functions, such as a function of distributing email sent by the users to destinations designated with the email addresses and a function of allocating email delivered to the mail servers to the user's mail boxes.

The domain management servers 14-1 through 14-N each supply a service providing terminal message sent from the transfer server 261 to the corresponding one of the service using terminals 13-1-1 through 13-1-M, the service using terminals 13-2-1 through 13-2-J, and the service using terminals 13-N-1 through 13-N-K, respectively.

The service using terminals 13-1-1 through 13-1-M, the service using terminals 13-2-1 through 13-2-J, and the service using terminals 13-N-1 through 13-N-K each receive a service providing terminal message from the corresponding one of the domain management servers 14-1 through 14-N.

Then, the user can check the service providing terminal message by using his/her service using terminal 13.

The configuration of the service using terminal 13 shown in Fig. 27 can be applied to the portable terminal 211 discussed with reference to Figs. 19 through 22. In this case, for example, the transfer server 261 transfers a service providing terminal message to the mail server (domain management server 14) provided by a cellular telephone carrier according to the transfer table, thereby allowing the portable terminal 211 to receive the service providing terminal message.

As described above, even if a plurality of domain management servers 14 are provided, the transfer server 261 can send service providing terminal messages from the service providing terminal 12 to the corresponding service using terminals 13-1-1 through 13-1-M, the service using terminals 13-2-1 through 13-2-J, and the service using terminals 13-N-1 through 13-N-K. That is, only by providing the transfer server 261, existing mail servers (domain management servers 14-1 through 14-N) provided by providers or cellular telephone carriers can be used as they are.

In the foregoing embodiment, the communication system 1 has been discussed in the context of a launderette washing finishing report service. However, the present invention can be applied in various scenes, for example, giving a message to a user waiting in a queue at a restaurant when a table is available, giving a message to a user waiting for an attraction in a theme park (amusement park) when his/her turn comes, or reporting an air ticket vacancy to a user.

That is, the present invention can be used when it is desired that predetermined information be reported to a user at a certain time.

Although in the above-described embodiment service providing terminal messages are sent by email, they may be sent by, for example, instant messaging.

A report address is generated by the address generator 62 of the service providing terminal 12. Alternatively, the IC card 11 (or portable terminal 211) may generate a report address, or the service providing terminal 12 may send only a service ID to the IC card 11 (or portable terminal 211) to allow the IC card 11 to generate a report address. That is, the IC card 11 (or portable terminal 211) itself may generate a report address, or may combine a service ID sent from the service providing terminal 12 with random numbers generated by the IC card 11 to generate a report address.

In this case, a service using terminal message containing the report address is sent from the IC card 11 (or portable terminal 211 via the service using terminal 13) to the domain management server 14. The domain management server 14 then stores the report address contained in the service using terminal message sent from the service using terminal 13 (portable terminal 211) in the transfer table stored in the table storage unit 124.

The above-described series of processing jobs may be executed by hardware or software. If software is used, a corresponding software program can be installed from a recording medium into a computer built in dedicated hardware or a computer, for example, a general-purpose personal computer, that can executes various functions by installing various programs thereinto.

This recording medium may be formed of a package medium recording the program thereon, such as the magnetic disk 171 (including a flexible disk), the optical disc 172 (including a compact disc read only memory (CD-ROM)), the magneto-optical disk 173 (including a mini-disk (MD) (trademark)), or the semiconductor memory 174, as shown in Fig. 7, which is distributed for providing the program to the user separately from the computer. Alternatively, the recording medium may be formed of a ROM (not shown) recording the program thereon, which is provided to the user while being integrated in the computer.

The program for executing the above-described series of processing jobs may be installed into the computer via a wired or wireless communication medium, such as a local area network (LAN), the Internet, digital satellite broadcasting, via an interface, such as a router or a modem, if necessary.

In this specification, steps forming the program stored in the recording medium may be executed in chronological order described in this specification. Alternatively, they may be executed in parallel or individually.

In this specification, the system represents the entire apparatus including a plurality of devices.

It should be understood by those skilled in the art that various modifications, combinations, sub-combinations and alterations may occur depending on design requirements and other factors insofar as they are within the scope of the appended claims or the equivalents thereof.

## Claims

1. An information processing system comprising:
an information providing apparatus (12);
a first electronic device (11);
a second electronic device (13); and
an information processing apparatus (14),
the information providing apparatus (12) including
first generation means (62) for generating a first address temporarily used for reporting predetermined information to a user,
first transmission means (61) for transmitting the first address to the first electronic device (11),
generation means (64) for generating the predetermined information when reporting the predetermined information to the user,
second generation means (63) for generating, on the basis of the first address and the predetermined information, a first message including the first address and the predetermined information as data for providing the predetermined information to the user, and
second transmission means (65) for transmitting the generated first message to the information processing apparatus (14),
the first electronic device (11) including
first reception means (32) for receiving the first address sent from the information providing apparatus (12),
storage means (38) for storing the received first address, and
third transmission means (40) for transmitting the stored first address to the second electronic device (13) in response to a request from the second electronic device (13),
the second electronic device (13) including
third generation means (103) for generating, on the basis of the first address sent from the first electronic device (11), a second message including the first address and a second address, which is an address of the second electronic device (13), as data for transmitting the first message to the information processing apparatus,
fourth transmission means (104) for transmitting the generated second message to the information processing apparatus,
second reception means (104) for receiving the first message sent from the information processing apparatus,
first analyzing means (105) for analyzing, on the basis of the received first message, the predetermined information included in the first message, and
reporting means (106) for reporting the predetermined information included in the first message to the user on the basis of an analysis result obtained by the first analyzing means (105),
the information processing apparatus (14) including
third reception means (121) for receiving the second message sent from the second electronic device (13),
second analyzing means (122) for analyzing, on the basis of the received second message, the first address and the second address included in the second message,
storage means (124) for storing the first address and the second address in association with each other on the basis of an analysis result obtained by the second analyzing means (122), and
fifth transmission means (121) for transmitting, on the basis of the first address and the second address stored in association with each other, the first message including the first address sent from the information providing apparatus to the second address.

2. An information providing apparatus (12) for providing information to an electronic device, comprising:
first generation means (62) for generating an address temporarily used for reporting predetermined information to a user;
first transmission means (61) for transmitting the address to a different electronic device (11);
generation means (64) for generating the predetermined information when reporting the predetermined information to the user;
second generation means (63) for generating, on the basis of the address and the predetermined information, a message including the address and the predetermined information as data for providing the predetermined information to the user; and
second transmission means (65) for transmitting the generated message to an information processing apparatus (14) that transfers the message to the electronic device.

3. The information providing apparatus according to claim 2, wherein the first generation means (62) generates the address from random numbers and a value identifying the information providing apparatus.

4. The information providing apparatus according to claim 2, wherein the first transmission means (61) transmits, together with the address, category information indicating a type of the predetermined information to the different electronic device,
the second generation means (63) generates a message including the category information, and
the second transmission means (65) transmits the generated message to the information processing apparatus (14).

5. An information providing method for an information providing apparatus that provides information to an electronic device, comprising the steps of:
generating an address temporarily used for reporting predetermined information to a user;
controlling the transmission of the address to a different electronic device;
generating the predetermined information when reporting the predetermined information to the user;
generating, on the basis of the address and the predetermined information, a message including the address and the predetermined information as data for providing the predetermined information to the user; and
controlling the transmission of the generated message to an information processing apparatus that transfers the message to the electronic device.

6. A recording medium recording thereon a computer-readable information providing program for an information providing apparatus that provides information to an electronic device, the computer-readable information providing program comprising the steps of:
generating an address temporarily used for reporting predetermined information to a user;
controlling the transmission of the address to a different electronic device;
generating the predetermined information when reporting the predetermined information to the user;
generating, on the basis of the address and the predetermined information, a message including the address and the predetermined information as data for providing the predetermined information to the user; and
controlling the transmission of the generated message to an information processing apparatus that transfers the message to the electronic device.

7. A program allowing a computer to execute processing for an information providing apparatus that provides information to an electronic device, comprising the steps of:
generating an address temporarily used for reporting predetermined information to a user;
controlling the transmission of the address to a different electronic device;
generating the predetermined information when reporting the predetermined information to the user;
generating, on the basis of the address and the predetermined information, a message including the address and the predetermined information as data for providing the predetermined information to the user; and
controlling the transmission of the generated message to an information processing apparatus that transfers the message to the electronic device.

8. An electronic device for transmitting or receiving data, comprising:
reception means (32) for receiving an address which is transmitted from an information providing apparatus (12) for providing predetermined information and which is temporarily used for reporting the predetermined information;
storage means (38) for storing the received address; and
transmission means (40) for transmitting the stored address to a different electronic device (13) in response to a request from the different electronic device (13).

9. An information processing method for an electronic device that transmits or receives data, comprising the steps of:
controlling the reception of an address which is transmitted from an information providing apparatus for providing predetermined information and which is temporarily used for reporting the predetermined information;
storing the received address; and
controlling the transmission of the stored address to a different electronic device in response to a request from the different electronic device.

10. A recording medium recording thereon a computer-readable information processing program for an electronic device that transmits or receives data, the computer-readable information processing program comprising the steps of:
controlling the reception of an address which is transmitted from an information providing apparatus for providing predetermined information and which is temporarily used for reporting the predetermined information;
storing the received address; and
controlling the transmission of the stored address to a different electronic device in response to a request from the different electronic device.

11. A computer-readable program for allowing a computer to execute processing for an electronic device that transmits or receives data, comprising the steps of:
controlling the reception of an address which is transmitted from an information providing apparatus for providing predetermined information and which is temporarily used for reporting the predetermined information;
storing the received address; and
controlling the transmission of the stored address to a different electronic device in response to a request from the different electronic device.

12. An electronic device for receiving data from an information processing apparatus or transmitting data to the information processing apparatus, comprising:
generation means (103) for generating, on the basis of a first address transmitted from a different electronic device and temporarily used for reporting predetermined information, a first message including the first address and a second address, which is an address of the electronic device;
transmission means (104) for transmitting the generated first message to the information processing apparatus (14);
reception means (104) for receiving a second message, which is data for providing the predetermined information to a user, transmitted from the information processing apparatus;
analyzing means (105) for analyzing, on the basis of the received second message, the predetermined information included in the second message; and
reporting means (106) for reporting the predetermined information included in the second message to the user on the basis of an analysis result obtained by the analyzing means (105).

13. The electronic device according to claim 12, further comprising:
selection means (102) for selecting and allocating, if the second message transmitted from the information processing apparatus includes category information indicating a type of the predetermined information, the second message according to the category information,
wherein the reporting means (106) reports the predetermined information included in the second message on the basis of the allocated second message.

14. An information processing method for an electronic device that receives data from an information processing apparatus or transmits data to the information processing apparatus, comprising the steps of:
generating, on the basis of a first address transmitted from a different electronic device and temporarily used for reporting predetermined information, a first message including the first address and a second address, which is an address of the electronic device;
controlling the transmission of the generated first message to the information processing apparatus;
controlling the reception of a second message, which is data for providing the predetermined information to a user, transmitted from the information processing apparatus;
analyzing, on the basis of the received second message, the predetermined information included in the second message; and
reporting the predetermined information included in the second message to the user on the basis of an analysis result obtained in the analyzing step.

15. A recording medium recording thereon a computer-readable information processing program for an electronic device that receives data from an information processing apparatus or transmits data to the information processing apparatus, the computer-readable information processing program comprising the steps of:
generating, on the basis of a first address transmitted from a different electronic device and temporarily used for reporting predetermined information, a first message including the first address and a second address, which is an address of the electronic device;
controlling the transmission of the generated first message to the information processing apparatus;
controlling the reception of a second message, which is data for providing the predetermined information to a user, transmitted from the information processing apparatus;
analyzing, on the basis of the received second message, the predetermined information included in the second message; and
reporting the predetermined information included in the second message to the user on the basis of an analysis result obtained in the analyzing step.

16. A program allowing a computer to execute processing for an electronic device that receives data from an information processing apparatus or transmits data to the information processing apparatus, comprising the steps of:
generating, on the basis of a first address transmitted from a different electronic device and temporarily used for reporting predetermined information, a first message including the first address and a second address, which is an address of the electronic device;
controlling the transmission of the generated first message to the information processing apparatus;
controlling the reception of a second message, which is data for providing the predetermined information to a user, transmitted from the information processing apparatus;
analyzing, on the basis of the received second message, the predetermined information included in the second message; and
reporting the predetermined information included in the second message to the user on the basis of an analysis result obtained in the analyzing step.

17. An information processing apparatus for receiving data from an electronic device or transmits data to the electronic device, comprising:
reception means (121) for receiving a first message including a first address temporarily used for reporting predetermined information and a second address, which is an address of the electronic device, transmitted from the electronic device;
analyzing means (122) for analyzing, on the basis of the received first message, the first address and the second address included in the first message;
storage means (124) for storing the first address and the second address in association with each other on the basis of an analysis result obtained by the analyzing means (122); and
transmission means (121) for transmitting to the second address, on the basis of the first address and the second address stored in association with each other, a second message including the first address, which is data for providing the predetermined information to a user, transmitted from an information providing apparatus for providing the predetermined information.

18. The information processing apparatus according to claim 17, wherein the storage means (124) further stores transfer information indicating a number by which the second message is transmitted to the electronic device in association with the first address, and
the transmission means (121) transmits the second message to the second address associated with the first address included in the second message on the basis of the transfer information.

19. An information processing method for an information processing apparatus that receives data from an electronic device or transmits data to the electronic device, comprising the steps of:
controlling the reception of a first message including a first address temporarily used for reporting predetermined information and a second address, which is an address of the electronic device, transmitted from the electronic device;
analyzing, on the basis of the received first message, the first address and the second address included in the first message;
storing the first address and the second address in association with each other on the basis of an analysis result obtained in the analyzing step; and
controlling, on the basis of the first address and the second address stored in association with each other, the transmission to the second address of a second message including the first address, which is data for providing the predetermined information to a user, transmitted from an information providing apparatus for providing the predetermined information.

20. A recording medium recording thereon a computer-readable information processing program for an information processing apparatus that receives data from an electronic device or transmits data to the electronic device, the computer-readable information processing program comprising the steps of:
controlling the reception of a first message including a first address temporarily used for reporting predetermined information and a second address, which is an address of the electronic device, transmitted from the electronic device;
analyzing, on the basis of the received first message, the first address and the second address included in the first message;
storing the first address and the second address in association with each other on the basis of an analysis result obtained in the analyzing step; and
controlling, on the basis of the first address and the second address stored in association with each other, the transmission to the second address of a second message including the first address, which is data for providing the predetermined information to a user, transmitted from an information providing apparatus for providing the predetermined information.

21. A program for allowing a computer to execute processing for an information processing apparatus that receives data from an electronic device or transmits data to the electronic device, comprising the steps of:
controlling the reception of a first message including a first address temporarily used for reporting predetermined information and a second address, which is an address of the electronic device, transmitted from the electronic device;
analyzing, on the basis of the received first message, the first address and the second address included in the first message;
storing the first address and the second address in association with each other on the basis of an analysis result obtained in the analyzing step; and
controlling, on the basis of the first address and the second address stored in association with each other, the transmission to the second address of a second message including the first address, which is data for providing the predetermined information to a user, transmitted from an information providing apparatus for providing the predetermined information.

22. An electronic device for receiving data from an information processing apparatus or transmitting data to the information processing apparatus, comprising:
first reception means (211) for receiving a first address which is transmitted from an information providing apparatus for providing predetermined information and which is temporarily used for reporting the predetermined information;
generation means (223) for generating, on the basis of the received first address, a first message including the first address and a second address, which is an address of the electronic device;
transmission means (224) for transmitting the generated first message to the information processing apparatus (14);
second reception means (224) for receiving a second message, which is data for providing the predetermined information to a user, transmitted from the information processing apparatus (14);
analyzing means (225) for analyzing, on the basis of the received second message, the predetermined information included in the second message; and
reporting means (226) for reporting the predetermined information included in the second message to the user on the basis of an analysis result obtained by the analyzing means (225).

23. The electronic device according to claim 22, further comprising:
selection means (222) for selecting and allocating, if the second message transmitted from the information processing apparatus includes category information indicating a type of the predetermined information, the second message according to the category information,
wherein the reporting means (226) reports the predetermined information included in the second message on the basis of the allocated second message.

24. An information processing method for an electronic device that receives data from an information processing apparatus or transmits data to the information processing apparatus, comprising the steps of:
controlling the reception of a first address which is transmitted from an information providing apparatus for providing predetermined information and which is temporarily used for reporting the predetermined information;
generating, on the basis of the received first address, a first message including the first address and a second address, which is an address of the electronic device;
controlling the transmission of the generated first message to the information processing apparatus;
controlling the reception of a second message, which is data for providing the predetermined information to a user, transmitted from the information processing apparatus;
analyzing, on the basis of the received second message, the predetermined information included in the second message; and
reporting the predetermined information included in the second message to the user on the basis of an analysis result obtained in the analyzing step.

25. A recording medium recording thereon a computer-readable information processing program for an electronic device that receives data from an information processing apparatus or transmits data to the information processing apparatus, the computer-readable information processing program comprising the steps of:
controlling the reception of a first address which is transmitted from an information providing apparatus for providing predetermined information and which is temporarily used for reporting the predetermined information;
generating, on the basis of the received first address, a first message including the first address and a second address, which is an address of the electronic device;
controlling the transmission of the generated first message to the information processing apparatus;
controlling the reception of a second message, which is data for providing the predetermined information to a user, transmitted from the information processing apparatus;
analyzing, on the basis of the received second message, the predetermined information included in the second message; and
reporting the predetermined information included in the second message to the user on the basis of an analysis result obtained in the analyzing step.

26. A program allowing a computer to execute processing for an electronic device that receives data from an information processing apparatus or transmits data to the information processing apparatus, comprising the steps of:
controlling the reception of a first address which is transmitted from an information providing apparatus for providing predetermined information and which is temporarily used for reporting the predetermined information;
generating, on the basis of the received first address, a first message including the first address and a second address, which is an address of the electronic device;
controlling the transmission of the generated first message to the information processing apparatus;
controlling the reception of a second message, which is data for providing the predetermined information to a user, transmitted from the information processing apparatus;
analyzing, on the basis of the received second message, the predetermined information included in the second message; and
reporting the predetermined information included in the second message to the user on the basis of an analysis result obtained in the analyzing step.
